# EUROPÄISCHE PATENTSCHRIFT

(11) **EP 3 744 154 B1**
(45) Veröffentlichungstag und Bekanntmachung des Hinweises auf die Patenterteilung: **03.11.2021**
(21) Anmeldenummer: 19701109.1
(22) Anmeldetag: 22.01.2019
(51) Int. Cl.: H05B 3/00, F27D 11/04, H05B 3/60

(54) **MIT FESTSTOFF GEPACKTE VORRICHTUNG ZUR DURCHFÜHRUNG VON ENDOTHERMEN REAKTIONEN MIT DIREKTER ELEKTRISCHER BEHEIZUNG**
DEVICE PACKED WITH SOLID MATTER FOR CONDUCTING ENDOTHERMIC REACTIONS WITH DIRECT ELECTRIC HEATING
DISPOSITIF REMPLI DE MATIÈRE SOLIDE DESTINÉ À LA CONDUITE DE RÉACTIONS ENDOTHERMIQUES À CHAUFFAGE ÉLECTRIQUE DIRECT

(30) Priorität: 26.01.2018 EP 18153697
(43) Veröffentlichungstag der Anmeldung: 02.12.2020
(73) Patentinhaber: BASF SE, 67056 Ludwigshafen am Rhein (DE)
(72) Erfinder: APPEL, Hagen, 67056 Ludwigshafen (DE); BERNNAT, Jens, 67056 Ludwigshafen (DE); GLENK, Friedrich, 67056 Ludwigshafen (DE); KOLIOS, Grigorios, 67056 Ludwigshafen (DE); OLBERT, Gerhard, 67056 Ludwigshafen (DE); SCHEIFF, Frederik, 67056 Ludwigshafen (DE); ZOELS, Bernd, 67056 Ludwigshafen (DE); KERN, Matthias, 67056 Ludwigshafen (DE); FLICK, Dieter, 67056 Ludwigshafen (DE); ANDERLOHR, Christopher Alec, 67056 Ludwigshafen (DE); KLINGLER, Dirk, 68623 Lampertheim (DE); WECHSUNG, Achim, 67056 Ludwigshafen (DE)
(74) Vertreter: BASF IP Association
(86) Internationale Anmeldenummer: PCT/EP2019/051466
(87) Internationale Veröffentlichungsnummer: WO 2019/145279

(56) Entgegenhaltungen:
- BE-A- 498 231
- CH-A- 278 580
- DE-C- 882 124
- DE-C2- 2 953 691
- US-A- 2 799 640
- US-A- 4 192 962
- US-A- 5 903 591

## Beschreibung

Die vorliegende Erfindung betrifft eine beheizbare gepackte Vorrichtung zur Durchführung von endothermen Reaktionen, die in einen oberen, mittleren und unteren Vorrichtungsabschnitt aufteilbar ist, wobei der obere und untere Vorrichtungsabschnitt gegen den mittleren Vorrichtungsabschnitt elektrisch isoliert ist, mit mindestens einem vertikal angeordneten Elektrodenpaar, das über den drucktragenden Vorrichtungsmantel im oberen und unteren Vorrichtungsabschnittabschnitt angeschlossen ist, und mit einer elektrisch leitfähigen Feststoff-Packung, die gegen die Seitenwand des mittleren Vorrichtungsabschnitts elektrisch isoliert ist.

Stark endotherme Reaktionen stehen häufig am Anfang der Wertschöpfungskette der chemischen Industrie, beispielsweise bei der Spaltung von Erdölfraktionen, der Reformierung von Erdgas oder Naphtha, der Dehydrierung von Propan, der Dehydroaromatisierung von Methan zu Benzol oder der Pyrolyse von Kohlenwasserstoffen. Temperaturen zwischen 500°C und 1700°C sind erforderlich, um technisch und wirtschaftlich interessante Ausbeuten zu erreichen. Der Grund hierfür liegt hauptsächlich in der thermodynamischen Limitierung des Gleichgewichtsumsatzes.

Endotherme Hochtemperaturreaktionen stellen zwei große Herausforderungen an die technische Umsetzung, zum einen den Eintrag von Wärme mit hoher Leistungsdichte bei der geforderten Reaktionstemperatur und zum anderen die integrierte Wärmerückführung zwischen den Produkt- und den Eduktströmen. Durch die integrierte Wärmerückführung kann die Temperaturdifferenz zwischen der Lagertemperatur der Edukte/Produkte und der geforderten Reaktionstemperatur mit minimalem Energieaufwand überbrückt werden.

Nach dem Stand der Technik werden Fließbettreaktoren zur wärmeintegrierten Führung endothermer Prozesse eingesetzt (Levenspiel, O. (1988), Chemical engineering's grand adventure. Chemical Engineering Science, 43(7), 1427-1435). Für die Wärmeversorgung der endothermen Reaktion werden unterschiedliche Konzepte angewandt.

US 2002/0007594 offenbart ein Verfahren zur parallelen Herstellung von Wasserstoff und kohlenstoffhaltigen Produkten, bei dem Erdgas in einen Reaktionsraum eingeleitet und in Gegenwart eines kohlenstoffreichen Feststoffes thermisch zersetzt wird. US 2002/0007594 offenbart, dass in einem vom Reaktionsraum der thermischen Zersetzung separaten Reaktor der kohlenstoffhaltige Feststoff aufgeheizt wird. Die Aufheizung erfolgt durch die bei einer Verbrennung von Kohlenwasserstoffen oder Wasserstoff entstehenden Verbrennungsgase. Anschließend wird der aufgeheizte Feststoff in den Reaktionsraum eingebracht.

Der Nachteil an der Verwendung eines Feststoffes als Wärmeträger ist, dass der Feststoff über das Temperaturniveau der Reaktion in einer separaten Brennkammer erhitzt und zwischen der Brennkammer und der Reaktionskammer zirkuliert werden muss. Die Handhabung des heißen Feststoffs führt zu einer extremen thermischen und mechanischen Belastung des Reaktors und der Regeleinrichtungen. Ferner ist der Feststoffpartikelstrom an den Wärmebedarf der Reaktion gekoppelt und eine gleichmäßige Verteilung der Massenströme über dem Querschnitt eine notwendige Bedingung, um die optimale Wärmeintegration zu erreichen. Folglich kann das Verhältnis zwischen dem Gasstrom und dem Feststoffstrom nur innerhalb eines engen Bereichs eingestellt werden.

WO 2013/004398 offenbart, die thermische Energie für die Wärmeträger außerhalb des Reaktionsraums zu erzeugen und gasförmigen Wärmeträger, die zur Zersetzungsreaktion inert und/oder ein Produkt dieser Reaktion sind, zu verwenden. Nachteilig ist, dass der Feststoffpartikelstrom an die Anforderungen der Wärmeintegration gekoppelt ist. Ferner durchläuft der Produktstrom der Zersetzungsreaktion einen Bereich abfallender Temperatur, in dem die Rückreaktion stattfinden kann.

Im Stand der Technik (z.B. US 6,331,283) werden ferner autotherme Verfahren beschrieben, in denen die für die endotherme Reaktion benötigte Wärme über eine exotherme Begleitreaktion im selben Reaktionsraum erzeugt wird. Der Nachteil dieser autothermen Verfahren ist die Kontamination des gasförmigen Produktstroms durch die Rauchgase, z.B. im Fall der Kohlenwasserstoffpyrolyse ein Einschleppen C-haltiger Komponenten in den wasserstoffreichen Produktstrom. Ferner sind nachteilig die Einbußen in der Produktausbeute, im Fall der Kohlenwasserstoffpyrolyse weitgehender Verlust des Pyrolysekohlenstoffs.

Desweiteren kann die Wärme indirekt, beispielsweise rekuperativ (z.B. EP 15 16 8206) oder über Heat-pipes (z.B. US 4,372,377) von der exothermen zur endothermen Reaktionskammer übertragen wird. Nachteilig an diesem Konzept sind die aufwendige Einbauten im heißen Abschnitt der Reaktionskammer, die hohe werkstofftechnische und konstruktive Ansprüche an die Abdichtung und an die Vermeidung von Wärmespannungen stellen. Ferner stören diese Einbauten die Feststoffströmung. Ein weiteres Problem dieses Konzepts ist das Fouling der Wärmeübertragerflächen; z.B. erfolgt im Fall der Kohlenwasserstoffpyrolyse die Abscheidung von pyrolytischem Kohlenstoff bevorzugt an heißen Flächen.

In US 2,982,622 wird eine wärmeintegrierte Pyrolyse von Kohlenwasserstoffen in einem Wanderbett aus inerten Materialen beschrieben. Die für die Pyrolyse benötigten Temperaturen von 1200 °C werden mit Hilfe einer elektrischen Beheizung erreicht. In den zwei Figuren der US 2,982,622 sind die Elektroden horizontal angeordnet. Die Möglichkeit einer vertikalen Anordnung ist in der Beschreibung offenbart. Den Figuren von US 2,982,622 ist zu entnehmen, dass sich die Elektrodendurchführungen im heißen Bereich des Reaktors befindet. Dadurch ergeben sich mehrfache Nachteile; zum einen bilden die Elektrodendurchführungen eine Wärmebrücke, die substanzielle Wärmeverluste verursachen kann und zum anderen ist die Durchführung per se mechanisch anspruchsvoll, da sie durch Schichten mit unterschiedlicher thermischer Ausdehnung geleitet werden muss, d.h. Reaktorwand aus Stahl und wärmedämmende Schichten aus mineralischen Werkstoffen. Dadurch kann die Durchführung hohe Biegemomente erfahren. Ferner müssen die Elektrodendurchführungen eine hohe Wärmestabilität aufweisen und es muss daher ein gewisser elektrischer Widerstand des Materials akzeptiert werden; üblicherweise wird Graphit eingesetzt.

In US 2,799,640 wird die Acelytenherstellung in einem Wirbelschichtreaktor beschrieben, wobei die benötigte Energie elektrisch zugeführt wird. Die Elektroden können horizontal oder vertikal angeordnet sein. Für die vertikale Anordnung ist ein ringförmig-spinnennetzartiges Elektrodengitter offenbart. Es wird beschrieben, dass die vertikale Anordnung eine gute Verteilung des elektrischen Stroms über den gesamten Reaktorraum gewährleistet. Den Figuren von US 2,799,640 ist zu entnehmen, dass sich sowohl bei horizontaler als auch bei vertikaler Anordnung der Elektroden die Elektrodendurchführungen im heißen Bereich des Reaktors befinden.

AT 175243 beschreibt einen elektrischen Ofen mit zwei vertikal angeordnete Elektroden zum Übertragen des Stroms auf das in dem Ofenschacht befindliche Schüttgut, wobei die obere Elektrode als innerlich gekühlter horizontaler balkenförmiger Hohlkörper ausgebildet ist und im Inneren der Schüttgutpackung angeordnet ist. Auch in dieser Offenbarung liegt die Elektrodendurchführung im heißen Bereich des Reaktors und führt durch den ausgemauerten Reaktordeckel.

CH 278580 offenbart einen Schachtofen mit zwei vertikal angeordneten ringförmigen Elektroden zum Übertragen des Stroms auf das in dem Schachtofen befindliche Schüttgut, wobei die obere Elektrode im Inneren der Schüttgutpackung während die untere Elektrode direkt über dem Gaseintrittsstutzen angeordnet ist. Auch in dieser Offenbarung liegt die Elektrodendurchführung im heißen Bereich des Reaktors und führt durch die Seitenwand des ausgemauerten Reaktors.

US 3,259,565 offenbart einen elektrisch beheizten Wirbelschichtreaktor für die Pyrolyse von Kohlenwasserstoffen. Die Schrift offenbart keine Details über die geometrische Anordnung und die konstruktive Ausführung der Elektroden. Figur 2 von US 3,259,565 deutet die Durchführung der elektrischen Versorgungsleitungen durch die Seitenwand des Reaktors an. Damit ist diese Lösung mit den weiter oben erwähnten Nachteilen behaftet.

Ein substanzieller Vorteil einer horizontalen Anordnung der Elektroden ist, dass die Elektroden den Querschnitt des Reaktors nicht versperren. Ferner kann bei einer horizontalen Anordnung durch vertikal geteilte Elektroden der elektrische Strom und damit die Heizleistung entlang der Strömungsrichtung gezielt verteilt werden.

Als Vorteile einer vertikalen Anordnung sind die Verteilung des Stroms über eine große Querschnittsfläche des Reaktors zu nennen, ferner die parallele Ausrichtung der elektrischen Potenziallinien in Strömungsrichtung und die Option eines konstanten Stroms über die gesamte Höhe des Reaktors.

US 5,903,591, US 5,406,582 und US 5,974,076 beschreiben eine Vorrichtung und einen Prozess für die Aktivierung oder Regenerierung von Kohlenstoff in einem drucklos betriebenen Rohrreaktor, der aus zwei oder mehreren übereinander angeordneten Zonen besteht. Der Kohlenstoff wird am oberen Ende über einen Einfülltrichter, der mit dem Reaktor verbunden ist, in die oberste Zone eingebracht und dann über trichterförmige Verteiler in die jeweils nächsten Zonen geleitet. Der Reaktor wird elektrisch beheizt, wobei der elektrische Strom in die oberste Zone über den Einfülltrichter und in den mittleren Zonen über die trichterförmigen Verteiler geleitet wird. Es werden keine Details zu den Verbindungen Einfülltrichter, Verbindungselement und Elektrode beschrieben. US 5,903,591 offenbart demnach sowohl Elektrodendurchführungen im heißen Bereich des Reaktors als auch einen flächigen Abschluss über den äußeren Einfülltrichter im kalten Bereich. Nachteilig an dieser Erfindung ist, dass der elektrische Strom nicht nur durch die Elektrode, sondern auch über die Wand des Einfülltrichters, auf die Kohlenstoffschüttung verteilt wird. Weiterhin nachteilig ist, dass die Verbindung der Elektrode mit dem stromführenden Gehäuse zusätzliche Übergangswiderstände erzeugt, die zu unerwünschter Dissipation elektrischer Energie in Wärmeenergie führen. Darüber hinaus stellen die Material-übergänge an den Verbindungselementen Schwachstellen für die mechanische Stabilität der Elektroden dar. Schließlich bewirkt die Querschnittsversperrung der als Block geformten Graphitelektrode eine Ungleicherteilung des Feststoffstroms über den Reaktorquerschnitt.

In der US 5,946,342 wird die Herstellung und Aktivierung von Aktivkohle in einem elektrisch beheizten Wanderbett beschrieben. Die Figur 3 der US 5,946,342 zeigt ringförmig ausgestaltete Elektroden mit einer großen Querschnittversperrung von > 50 %. Die Elektroden bestehen aus Kohlenstoff und weisen spitz zulaufende Enden parallel zur Strömungsrichtung der Aktivkohle auf. Die konkrete Kontaktierung der Elektroden wird nicht beschrieben; aus der Figur 3 der US 5,946,342 wird ersichtlich, dass die Kontaktierung nicht über die Reaktorhauben erfolgt.

US 7,288,503 beschreibt ebenso die Herstellung und Aktivierung von Aktivkohle in einem elektrisch beheizten Festbett. Es werden Stabelektroden verwendet; die Durchführung der Elektroden erfolgt durch den Deckel und die Elektroden sind gegen den Deckel isoliert (siehe Figur 3 der US 7,288,503).

DE 102 36 019 A1 beschreibt einen Reaktor zur Durchführung von endothermen Reaktionen, der mit einem oder mehreren, den Reaktorquerschnitt vollständig ausfüllenden Heizblöcken ausgestattet ist, die gegen die Reaktorinnenwand und ggf. gegeneinander elektrisch isoliert sind, wobei die Heizblöcke aus offenzelligem Schaumstoff gebildet sind. Die Art und Weise der Kontaktierung der Elektroden wird nicht beschrieben.

Trotz vieler Vorteile einer elektrischen Beheizung:
(i) Die Heizleistung ist weitgehend konstant über den gesamten Temperaturbereich und nicht durch die Temperatur eines Wärmeträgers limitiert.
(ii) Der Verzicht auf Brennstoffe und auf Wärmeträger vereinfacht die konstruktive Gestaltung des Reaktors und spart die Regelkreise zur Dosierung der entsprechenden Stoffströme in der Peripherie der Reaktionsstrecke ein. Außerdem wird eine Kontamination / Verdünnung der Prozessströme durch Fremdstoffe ausgeschlossen. Dadurch wird die Betriebssicherheit des Reaktors erhöht.
(iii) Die Heizleistung kann in einem einfachen Reaktor ohne Einbauten, d.h. mit unstrukturiertem Querschnitt, eingebracht werden. Dadurch ist eine zuverlässige Skalierung gewährleistet.
(iv) Die Beheizung ist lokal emissionsfrei. Bei Einsatz regenerativer, CO2-freier Quellen ist die Beheizung sogar vollständig emissionsfrei,
überwog bislang bei der Frage der Beheizung der entscheidende Nachteil, dass die elektrische Energie teuer im Vergleich zu fossilen Energieträgern ist. Dieser Nachteil sollte jedoch aufgrund der Energiewende in den nächsten Jahren wegfallen.

Außerdem fehlt bisher ein Reaktorkonzept zur effizienten Einleitung und zur gleichmäßigen Verteilung der elektrischen Energie in gepackte Reaktoren zur Durchführung endothermer Gasphasen oder Gas-Feststoffreaktionen bei hohen Temperaturen. Die im zitierten Stand der Technik angedeuteten Ansätze der Elektrodenkontaktierung über den Reaktormantel stellen sich in der Umsetzung als nicht praktikabel heraus. Erstens, ist die Durchführung von elektrischen Anschlüssen im heißen Bereich des Reaktors extrem aufwendig und störungsanfällig. Zweitens, ist die Kontaktierung der Elektroden an die Stromquelle quasi punktförmig. Dieses Merkmal hat mehrere Nachteile: Der elektrische Strom wird ungleichmäßig über den Querschnitt der Packung verteilt. Außerdem haben die Verbindungselemente, welche die elektrische Kontaktierung der Elektroden bewerkstelligen, eine kleine Querschnittsfläche, dadurch einen hohen elektrischen Widerstand. Dadurch wird ein signifikanter Teil der eingeleiteten elektrischen Leistung in den Verbindungselementen und in der Elektrode selbst dissipiert, insbesondere, wenn diese aus Grafit besteht. Folglich wird die elektrische Energie unzureichend in der Reaktorpackung genutzt. Zusätzlich müssen die Verbindungselemente und / oder die Elektrode gezielt gekühlt werden, was eine aufwendige und komplizierte Apparatekonstruktion erforderlich macht. Drittens, ist die Konstruktion der Elektroden und der zugehörigen Verbindungselemente nicht skalierbar: folglich sind die Betriebsbedingungen in einem Versuchsreaktor mit einer kleinen Querschnittsfläche nicht repräsentativ für eine technische Vorrichtung mit einer großen Querschnittsfläche.

Industriell wird derzeit die elektrische Beheizung nur in wenigen Großprozessen verwendet; z.B. bei der chemischen Gasphasen-Reaktion von Ammoniak und Kohlenwasserstoffen zu Blausäure bei Temperaturen von 1300 bis 1600°C in einem Wirbelschichtreaktor aus elektrisch leitenden Kohlenstoffpartikeln oder bei der Calcium-Carbid-Herstellung in Schmelzreduktionsöfen bei Temperaturen zwischen 2000°C und 2300°C. In der Figur 2 von US 3,157,468 ist ein Blausäure-Reaktor zu sehen mit vertikal angeordneten stabförmigen Elektroden, die pro Elektrode eine Elektrodendurchführung aufweist. Im Ullmann, Kapitel "Calcium Carbide" werden vorgebackene Kohlenstoffelektroden oder selbstbackende Söderberg-Elektroden erwähnt. Der im Stand der Technik übliche Typ sind Hohlelektroden vom Söderberg-Typ. Die Elektroden werden mit Dreiphasen-Drehstrom betrieben und mit gekühlten Klemmen an ihrem Umfang kontaktiert. Da Kohlenstoff ein Edukt der Calcium-Carbid-Herstellung ist, werden die Elektroden verbraucht und müssen nachgeführt werden. Die Nachteile dieser Ausführungen sind die aufwendige Durchführung der einzelnen Elektroden durch das Reaktorgehäuse, da jede Durchführung separat abgedichtet und elektrisch kontaktiert werden sowie eine kontrollierte axiale Verschiebung der Elektrode ermöglichen muss. Ferner wächst die Anzahl der erforderlichen Durchführungen proportional zur Querschnittsfläche des Reaktors.

In technischen Reaktoren können zwischen der zentralen Achse und der Reaktorhülle Temperaturdifferenzen größer als 500K entstehen. Unter den gegebenen Betriebsbedingungen können die offenbarten Konfigurationen der Elektrodengitter, die einteilig ausgeführt und am Umfang starr eingespannt sind, reißen.

Derzeit gibt es keinen kommerziell betriebenen, elektrisch beheizten, gepackten Reaktor für die Durchführung von endothermen Reaktionen in der Gasphase oder von Gas-Feststoffreaktionen.

Die meisten konventionell betriebenen Hochtemperaturprozesse werden durch befeuerte Öfen beheizt. Diese Verfahren sind auf einen Energieexport angewiesen, um wirtschaftlich zu arbeiten; nur ca. 50% der im Prozess erzeugten Wärme wird tatsächlich für die endotherme Reaktion genutzt. Eine vollständige Wärmeintegration ist somit noch ein fernes Ziel.

Die Aufgabe der vorliegenden Erfindung war demnach, ein anpassbares, skalierbares, elektrisch beheiztes Vorrichtungskonzept, insbesondere drucktragendes Reaktorkonzept, für die Klasse der gepackten endothermen Hochtemperaturprozesse aufzuzeigen. Eine weitere Aufgabe war, die elektrische Energie verlustarm, in die beheizte Zone der Vorrichtung, insbesondere des Reaktors, zu bringen. Das heißt, dass vorteilhaft mehr als 99% der in die Vorrichtung eingeleitete elektrische Leistung in der beheizten Zone freigesetzt werden soll. Eine weitere Aufgabe war, dass der Strom möglichst gleichmäßig über die komplette Länge der beheizten Zone fließt; hierdurch können eine annähernd gleichmäßige Beheizung der Packung und folglich ein linearer Umsatzverlauf erreicht werden. Eine weitere Aufgabe war, eine gepackte Vorrichtung, insbesondere einen gepackten Reaktor, aufzuzeigen, der eine möglichst vollständige Wärmeintegration aufweist. Eine weitere Aufgabe war, dass die Erprobungen in einem Versuchsreaktor mit kleiner Querschnittsfläche repräsentativ für eine technische Vorrichtung, insbesondere einen technischen Reaktor sein soll. Ferner sollte die elektrisch beheizte Vorrichtung, insbesondere der elektrisch beheizbare Reaktor, generell apparativ einfach gestaltet sein.

Überraschenderweise konnte eine elektrisch beheizbare, gepackte, drucktragende Vorrichtung, insbesondere ein Reaktor, aufgezeigt werden, mit einem oberen (3), mittleren (1) und unteren (2) Vorrichtungsabschnitt, wobei im mittleren Abschnitt (1) mindestens ein vertikal angeordnetes Elektrodenpaar (4,5) eingebaut/angeordnet ist und alle Elektroden in einer elektrisch-leitenden Feststoff-Packung (26) angeordnet/eingebettet sind, die oberen und unteren Vorrichtungsabschnitte eine spezifische Leitfähigkeit von 10⁵ S/m bis 10⁸ S/m aufweisen, und der mittlere Vorrichtungsabschnitt gegen die Feststoff-Packung elektrisch isoliert ist, dadurch gekennzeichnet, dass der obere und untere Vorrichtungsabschnitt gegen den mittleren Vorrichtungsabschnitt elektrisch isoliert ist, die obere Elektrode über den oberen Vorrichtungsabschnitt und die untere Elektrode über den unteren Vorrichtungsabschnitt angeschlossen sind oder die Elektroden jeweils über ein oder mehrere an diesen Abschnitten elektrisch kontaktierte Verbindungselemente (10,16) angeschlossen sind und das Verhältnis der Querschnittsfläche der oberen und/oder, bevorzugt und, unteren Elektrode zur Querschnittsfläche des jeweiligen stromleitenden Verbindungselements oder, ohne Verwendung eines Verbindungselements, das Verhältnis der Querschnittsfläche der oberen und/oder, bevorzugt und, unteren Elektrode zur Querschnittsfläche des jeweiligen stromleitenden Vorrichtungsabschnitts 0,1 bis 10 beträgt.

Die erfindungsgemäße Vorrichtung wird im Folgenden ferner als "Reaktor" bezeichnet.

Unter "drucktragende Vorrichtung" wird in der vorliegenden Anmeldung eine Vorrichtung verstanden, die eine Druckdifferenz von größer 0,5 bar zwischen ihrem Inneren und ihrer Umgebung standhält.

Unter "Haube" wird in der vorliegenden Anmeldung der stirnseitige Abschnitt der drucktragenden Reaktorhülle verstanden.

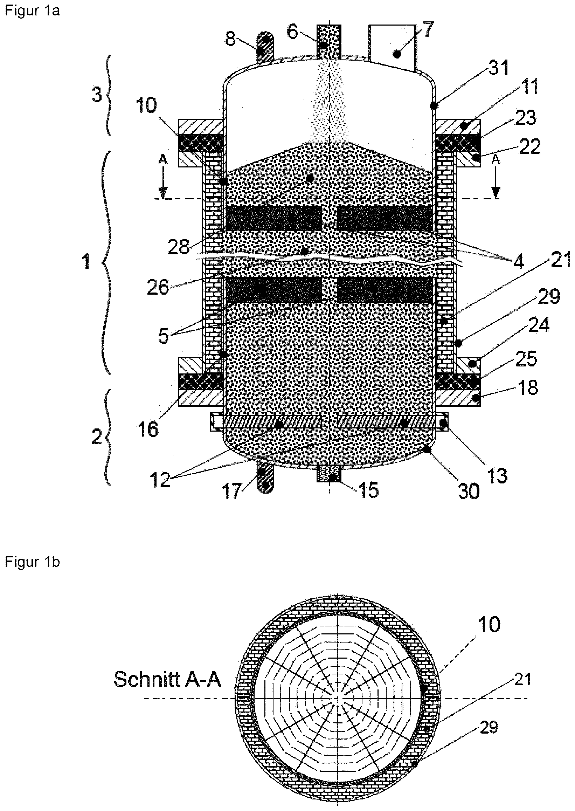

Unter "Verbindungselement" werden in der vorliegenden Anmeldung die mit der Haube elektrisch leitend verbundenen Bauteile der Vorrichtung verstanden, die den elektrischen Strom von den Anschlusspunkten an der Haube zu den Elektroden leiten. Ein Verbindungselement ist beispielsweise eine an der Reaktorhaube befestigte Schürze (siehe Figur 1a).

Die Verbindungselemente sind vorteilhaft am äußeren Umfang der Feststoffpackung angeordnet. Die Fläche des lichten Querschnitts des Verbindungselements, d.h. die Fläche, die vom Verbindungselement eingeschlossen ist, ist vorteilhaft größer als 90 %, bevorzugt größer als 95%, insbesondere größer als 98% der Querschnittsfläche der Feststoff-Packung. Besonders bevorzugt schließen die Verbindungselemente in Umfangsrichtung bündig mit der Umrandung der Feststoffpackung ab. Vorteilhaft sind die Verbindungselemente zylindrisch oder prismatisch. Vorteilhaft überdecken die Verbindungselemente horizontal weniger als 10 %, bevorzugt weniger als 5 %, insbesondere weniger als 2 % der Querschnittsfläche der Feststoffpackung; besonders bevorzugt ragen die Verbindungselemente horizontal nicht in die Feststoffpackung hinein. Die Verbindungselemente bestehen vorteilhaft aus dem gleichen Material wie die Elektroden.

Unter "Querschnitt Verbindungselement" wird in der vorliegenden Anmeldung die Schnittfläche zwischen dem Verbindungselement und einer beliebigen horizontalen Ebene mit dem kleinsten Flächeninhalt verstanden, die das Verbindungselement schneidet (siehe Figur 1b).

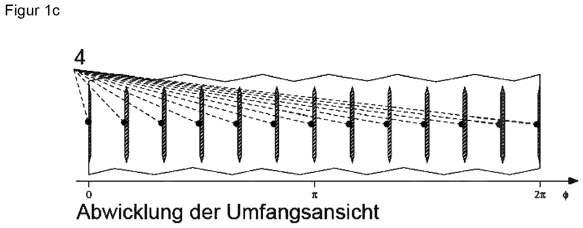

Unter "Querschnitt der Elektrode" wird in der vorliegenden Anmeldung die Schnittfläche zwischen der Elektrode und dem an der Elektrode kontaktierten, stromleitenden Verbindungselement verstanden (siehe Figur 1c).

Unter "Querschnitt des oberen oder unteren Vorrichtungsabschnitts" wird in der vorliegenden Anmeldung die Schnittfläche zwischen dem oberen oder unteren Vorrichtungsabschnitt und einer beliebigen horizontalen Ebene mit dem kleinsten Flächeninhalt verstanden, die diese Abschnitte schneidet (analog dem Verbindungselement in Figur 1b).

Unter "elektrisch isoliert" wird in der vorliegenden Anmeldung ein Ohmscher Widerstand von größer als 1 kQ, bevorzugt größer als 100 kQ, insbesondere größer als 1 MΩ zwischen der Feststoffpackung und der Seitenwand des mittleren Abschnitts des Reaktors und zwischen den oberen und unteren Vorrichtungsabschnitten, z.B. Hauben, und der Seitenwand des mittleren Abschnitts des Reaktors, gemessen gemäß der Norm DIN VDE 0100-600:2017-06 (Ausgabedatum 2017-06), verstanden.

Unter "Seitenwand des Reaktors" wird in der vorliegenden Anmeldung der im Wesentlichen senkrecht gerichteten Abschnitt der Reaktorhülle (1) verstanden. Entlang der Seitenwand haben horizontale Schnitte durch den Reaktor im Wesentlichen denselben Flächeninhalt (Querschnittsfläche der Feststoffpackung).

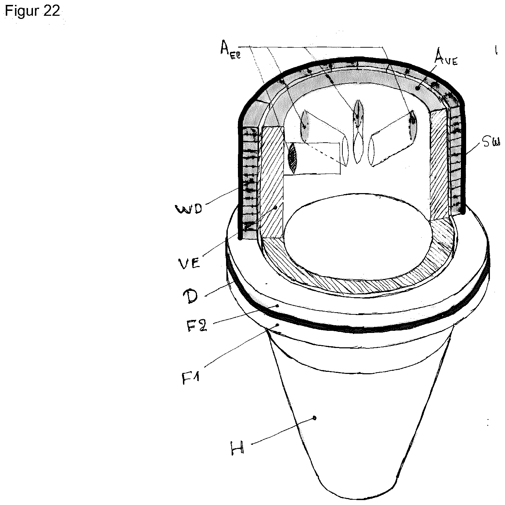

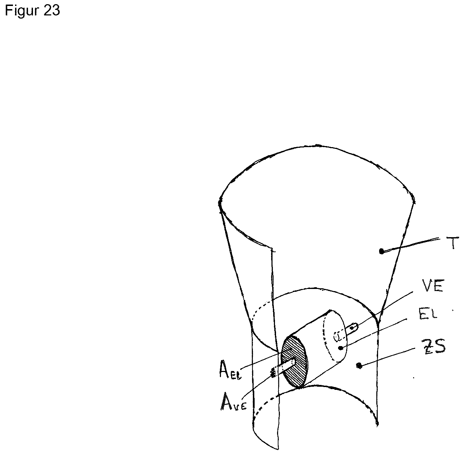

Das Verhältnis der Querschnittsfläche der oberen und/oder unteren Elektrode, bevorzugt der oberen und unteren Elektrode, zur Querschnittsfläche des jeweiligen stromleitenden Verbindungselements beträgt vorteilhaft 0,1 bis 10, bevorzugt 0,3 bis 3, insbesondere 0,5 bis 2. Vorteilhaft liegt die Querschnittsfläche der Elektrode (z.B. die Querschnittsfläche aller Elektrodenstege einer gitterförmigen Elektrode) im Bereich von 0,1 cm² bis 10000 cm², bevorzugt 1 cm² bis 5000 cm², insbesondere 10 cm² bis 1000 cm². Vorteilhaft liegt die Querschnittsfläche des oder der stromleitenden Verbindungselemente im Bereich von 0,1 cm² bis 10000 cm², bevorzugt 1 cm² bis 5000 cm², insbesondere 10 cm² bis 1000 cm². Die Berechnung des Verhältnisses (Querschnittsfläche_{Elektrode(obere)}/Querschnittsfläche_{Verbindungselement(oberes)}) bzw. (Querschnittsfläche_{Elektrode(untere)}/Querschnittsfläche_{Verbindungselement(unteres)}) wird in den Figuren 22 und 23 verdeutlicht.

Ohne Verwendung eines Verbindungselements (zwischen der Elektrode und dem oberen bzw. unteren Vorrichtungsabschnitt) beträgt das Verhältnis der Querschnittsfläche der oberen und/oder unteren Elektrode, bevorzugt der oberen und unteren Elektrode, zur Querschnittsfläche des jeweiligen stromleitenden Vorrichtungsabschnitts vorteilhaft 0,1 bis 10, bevorzugt 0,3 bis 3, insbesondere 0,5 bis 2. Vorteilhaft liegt die Querschnittsfläche der Elektrode im Bereich von 0,1 cm² bis 10000 cm², bevorzugt 1 cm² bis 5000 cm², insbesondere 10 cm² bis 1000 cm². Vorteilhaft liegt die Querschnittsfläche des oberen und/oder unteren Vorrichtungsabschnitts im Bereich von 0,1 cm² bis 10000 cm², bevorzugt 1 cm² bis 5000 cm², insbesondere 10 cm² bis 1000 cm².

Vorteilhaft wird zwischen dem oberen und den unteren Vorrichtungsabschnitt, z. B. zwei Reaktorhauben, eine Potenzialdifferenz (Spannung) von 1 Volt bis 10000 Volt, bevorzugt von 10 Volt bis 5000 Volt, besonders bevorzugt von 50 Volt bis 1000 Volt aufgeprägt. Die elektrische Feldstärke zwischen den Hauben liegt vorteilhaft zwischen 1 V/m und 100000 V/m, bevorzugt zwischen 10 V/m und 10000 V/m, weiter bevorzugt zwischen 50 V/m und 5000 V/m, insbesondere zwischen 100 V/m und 1000 V/m.

Die spezifische elektrische Leitfähigkeit der Feststoff-Packung beträgt vorteilhaft von 0,001 S/cm bis 100 S/cm, bevorzugt von 0,01 S/cm bis 10 S/cm, insbesondere von 0,05 S/cm bis 5 S/cm.

Es ergibt sich in der Feststoff-Packung vorteilhaft eine elektrische Stromdichte von 0,01 A/cm² bis 100 A/cm², bevorzugt von 0,05 A/cm² bis 50 A/cm², insbesondere von 0,1 A/cm² bis 10 A/cm².

Der Reaktor ist vorteilhaft in mehrere Zonen aufgeteilt. Vorteilhaft gibt es von unten nach oben angeordnet: den Auslauf der Partikeln, die Gaseinleitung (12), die untere Wärmeübertragungszone, die untere Elektrode (5), die beheizte Zone, die obere Elektrode (4) mit optional einem Seitenabzug (19), die obere Wärmeübertragungszone, den Austritt des gasförmigen Produktstroms (7) und die Zuführung des Partikelstroms (6).

Die untere Wärmeübertragungszone ist die vertikale Strecke zwischen dem oberen Rand der Gaseinleitung und dem oberen Rand der unteren Elektrode.

Die obere Wärmeübertragungszone ist die vertikale Strecke zwischen dem unteren Ende der oberen Elektrode und dem oberen Ende der Feststoffpackung.

Die beheizte Zone an jedem Punkt des Reaktorquerschnitts ist als der vertikale Abstand zwischen dem unteren Ende der oberen Elektrode und dem oberen Ende der unteren Elektrode definiert.

Vorteilhaft sind die untere Seite der oberen Elektrode und die obere Seite der unteren Elektrode über den gesamten Reaktorquerschnitt horizontal. Folglich ist die Länge der beheizten Zone, insbesondere die Strecke zwischen den Elektroden, vorteilhaft einheitlich über den gesamten Reaktorquerschnitt. Der beheizte Reaktorquerschnitt beträgt vorteilhaft von 0,005 m² bis 200 m², bevorzugt von 0,05 m² bis 100 m², besonders bevorzugt von 0,2 m² bis 50 m², insbesondere von 1 m² bis 20 m². Die Länge der beheizten Zone beträgt vorteilhaft zwischen 0,1 m und 100 m, vorzugsweise zwischen 0,2 m und 50 m, besonders bevorzugt zwischen 0,5 m und 20 m, insbesondere zwischen 1 m und 10 m. Das Verhältnis der Länge zum äquivalenten Durchmesser der beheizten Zone beträgt vorteilhaft von 0,01 bis 100, bevorzugt von 0,05 bis 20, besonders bevorzugt von 0,1 bis 10, ganz besonders bevorzugt von 0,2 bis 5.

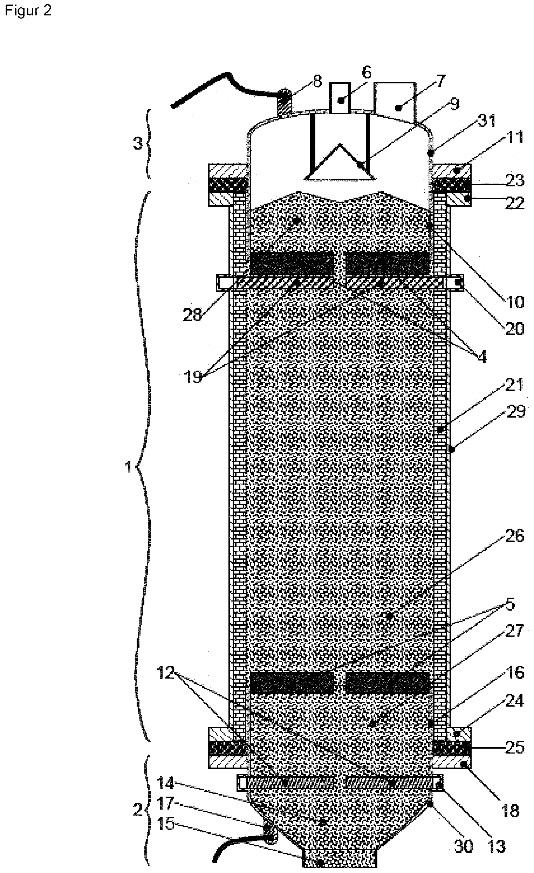

Die Elektroden sind vorteilhaft im Inneren der Feststoff-Packung positioniert (siehe Figuren 1 und 2). Der vertikale Abstand zwischen dem oberen Rand der Feststoffpackung (bei einer Böschung der tiefste Punkt) und dem unteren Rand der Elektrodenplatten bzw. ohne Verwendung von Elektrodenplatten dem unteren Rand der Elektrodenstege an der oberen Elektrode beträgt vorteilhaft von 10 mm bis 5000 mm, bevorzugt von 100 mm bis 3000 mm, weiter bevorzugt von 200 mm bis 2000 mm. Dieser Abschnitt beträgt vorteilhaft von 1 % bis 50%, bevorzugt von 2% bis 20%, besonders bevorzugt von 5% bis 30% der gesamten Höhe der Feststoffpackung.

Der vertikale Abstand zwischen dem oberen Rand der Elektrodenplatten an der unteren Elektrode und dem Zulauf der gasförmigen Edukte beträgt vorteilhaft von 10 mm bis 5000 mm, bevorzugt von 100 mm bis 3000 mm, weiter bevorzugt von 200 mm bis 2000 mm. Dieser Abschnitt beträgt vorteilhaft von 1 % bis 50%, bevorzugt von 2% bis 20%, besonders bevorzugt von 5% bis 30% der gesamten Höhe der Feststoffpackung.

Der vertikale Abstand zwischen der Zuführung des Partikelstroms (6) und dem oberen Rand der Feststoffpackung beträgt vorteilhaft 50 mm bis 5000 mm, bevorzugt zwischen 100 mm und 3000 mm, besonders bevorzugt zwischen 20 mm und 2000 mm.

Die Elektroden können alle dem Fachmann bekannte Formen annehmen. Beispielhaft sind die Elektroden als Gitter (Figur 12, Figur 13, Figur 14) oder als Stäbe (Figur 16) ausgebildet.

Bei der Verwendung von Stäben sind spitz-zulaufende Elektrodenstäbe besonders vorteilhaft. Bevorzugt laufen die oberen und die unteren Elektrodenstäbe an der Seite zur beheizten Zone hin spitz zu. Die Spitze kann kegelförmig (Figur 16a) oder keilförmig (Figur 16b) sein. Entsprechend kann das Stabende punktförmig oder linienförmig sein. Figur 17 zeigt eine Skizze des mit Stabelektroden ausgestatteten erfindungsgemäßen Reaktors. Figur 18 zeigt eine Detailskizze der oberen Reaktorhaube. Anders als beispielsweise in US 3,157,468 oder US 7,288,503 sind die Stabelektroden elektrisch leitend mit der Haube verbunden und werden gemeinsam über die Haube mit elektrischem Strom versorgt.

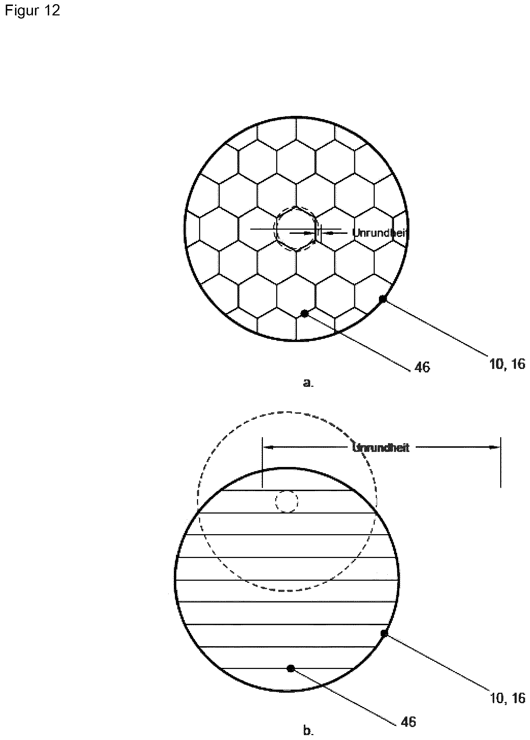

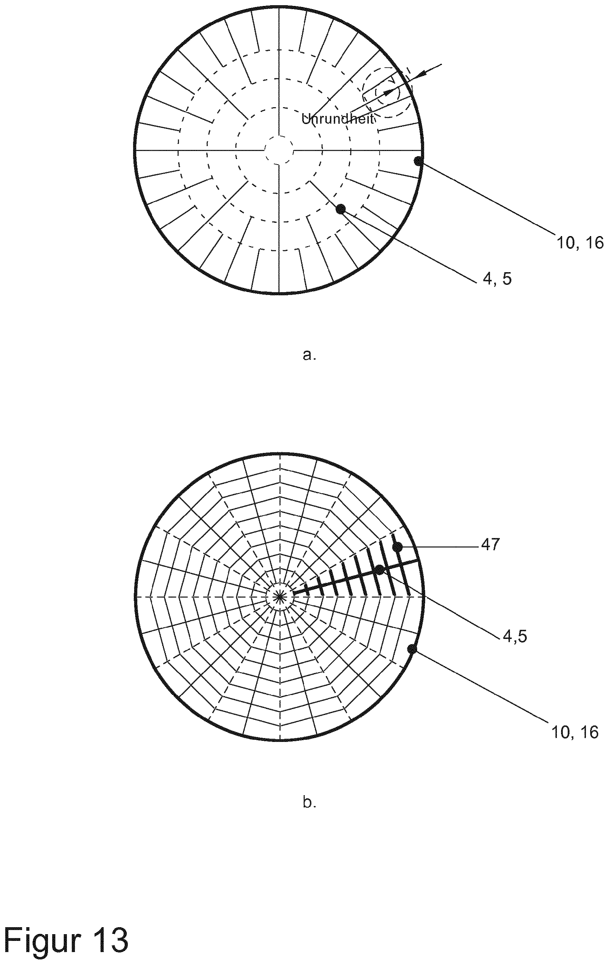

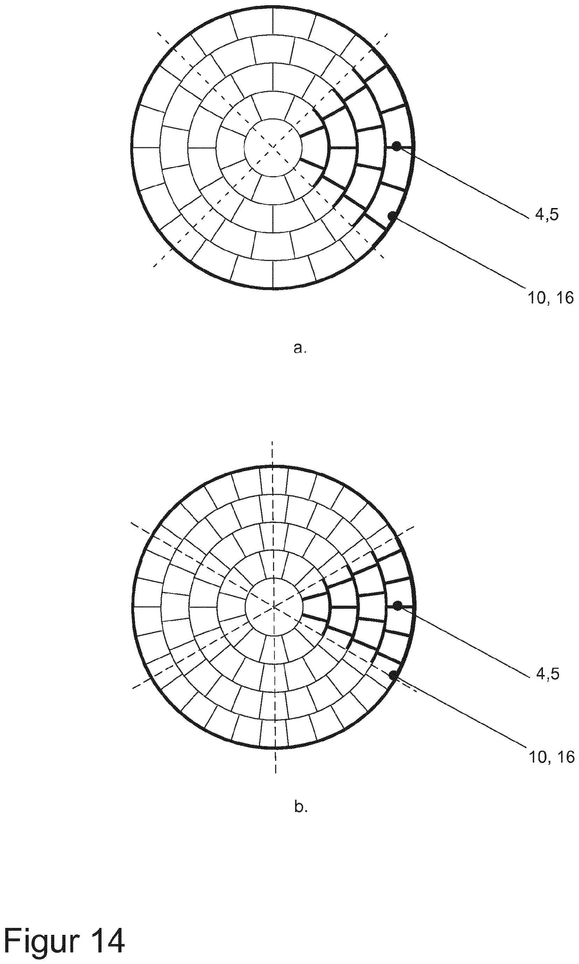

Bevorzugt weisen die Elektroden eine Gitterform auf. Für die Gitterform sind verschiedene Gestaltungsvarianten denkbar, beispielsweise sind wabenförmige Gitter aus vorteilhaft regelmäßigen Vielecken (Figur 12 a), rechteckförmige Gitter (Figur 12b) gebildet aus parallelen Stegen, speichenförmige Gitter (Figur 13) oder Gitter aus konzentrischen Ringen (Figur 14). Besonders bevorzugt sind speichenförmige Gitter und Gitter aus konzentrischen Ringen.

Besonders bevorzugt ist eine Elektrode in Gitterform, die an der Innenseite des oberen bzw. unteren Vorrichtungsabschnittes, z.B. einer Haube, oder an einem Verbindungselement, z.B. einer an dem Vorrichtungsabschnitt befestigten Schürze, fest gelagert ist.

Als Festlager wird die Verbindung eines starren Körpers mit seiner Umgebung verstanden, mit deren Hilfe eine Relativbewegung zwischen dem Körper und seiner Umgebung in allen Richtungen unterbunden wird.

Beispielsweise ist das speichenförmige Gitter vorteilhaft aus sternförmig angeordneten Stegen geformt, die an der Haube oder einem daran befestigten Verbindungselement aufgehängt sind (Figur 13a). Neben dem Begriff "Stege" werden im Stand der Technik auch die Begriffe "Speiche", "Träger" oder "Schiene" verwendet.

In einer weiteren Ausgestaltung ist das speichenförmige Gitter vorteilhaft aus sternförmig angeordneten Stegen geformt, die an der Haube aufgehängt sind und orthogonal davon ausgehende Elektrodenplatten tragen (Figur 13b). Neben dem Begriff "Elektroden-Platte" werden im Stand der Technik auch die Begriffe "Flügel", "Rippe", "Seitenschiene" oder "Seitensteg" verwendet.

In einer weiteren Ausgestaltung ist das Gitter vorteilhaft aus konzentrischen Ringen geformt, die über radiale Stege verbunden sind (Figur 14a, 14b). Das Gitterform ist, gemäß der Definition in DE 69917761 T2 [0004] "fraktal skaliert".

Die Elektroden, d.h. Elektrodenstege und Elektrodenplatten, unterteilen den Querschnitt der Reaktionsstrecke in Gitterzellen. Die Reaktionsstrecke ist das Volumen im Inneren des Reaktors, das mit der Feststoffpackung gefüllt ist. Gitterzellen sind geschlossene oder konvexe Flächensegmente des Reaktor-Querschnitts, die vom Elektrodengitter begrenzt werden. Beispielhaft sind in Figur 12a die geschlossenen Flächenelemente dargestellt, diese entstehen durch das wabenförmige Gitter (46) innerhalb der Haube (10) oder (16). Beispielsweise sind in Figur 12b die Zellen die Bänder zwischen zwei benachbarten Stegen (46) und den zugehörigen Bogenabschnitten der Haube. In den Figuren 12 bis 14 sind diejenigen Flächen einzelne Gitterzellen, die durch durchgängige oder gestrichelte Linien umrandet sind. Beispielhaft sind in Figur 13a die Zellen begrenzt durch benachbarte Speichen des Gitters (4,5) und ggf. durch die gestrichelten Kreislinien oder durch die Haube (10, 16). Beispielhaft sind in Figur 13b die Zellen durch die benachbarten Elektrodenplatten eines Stegs, dem dazugehörigen Stegsegment und der gestrichelten Mittellinie zwischen zwei benachbarten Gittern begrenzt. Beispielhaft sind die Zellen in Figur 14a und Figur 14b die geschlossenen Flächenelemente, die von benachbarten Stegen und Ringen, bzw. von der Reaktorhaube begrenzt werden.

Die Gitterzellen werden durch folgende Parameter charakterisiert: Offener Querschnitt, äquivalenter Durchmesser, Unrundheit und Querschnittsversperrung.

Unter dem Begriff "offener Querschnitt" wird in der vorliegenden Erfindung die Fläche des durchströmbaren Querschnitts einer Zelle verstanden. Unter dem Begriff "äquivalenter Durchmesser" wird in der vorliegenden Erfindung der Durchmesser eines zur Gitterzelle flächengleichen Kreises verstanden. Unter dem Begriff "Unrundheit" wird in der vorliegenden Erfindung die minimale Breite eines Ringes zwischen zwei Kreisen mit einem gemeinsamen Zentrum, der die Randlinie der Gitterzelle vollständig umschließt, verstanden. Die Unrundheit hat die Dimension einer Länge. Die Unrundheit eines Kreises ist Null. Unter dem Begriff "Querschnittsversperrung" wird bei der vorliegenden Erfindung der Anteil des Querschnitts der Feststoffpackung, der durch die Elektrode abgedeckt wird, bezogen auf die gesamte Querschnittsfläche der Feststoffpackung (der Reaktionsstrecke), verstanden.

Der offene Querschnitt der Gitterzellen beträgt vorteilhaft zwischen 4 cm² und 10000 cm², bevorzugt zwischen 20 cm² und 3000 cm², besonders bevorzugt zwischen 100 cm² und 1000 cm². Der offene Querschnitt ist demnach unabhängig vom Reaktordurchmesser und die Anzahl der Gitterzellen annährend proportional zum Reaktorquerschnitt.

Der äquivalente Durchmesser der Gitterzellen beträgt vorteilhaft zwischen 10 mm und 2000 mm, bevorzugt zwischen 20 mm und 1000 mm, besonders bevorzugt zwischen 50 mm und 500 mm.

Die Unrundheit der Gitterzellen beträgt vorteilhaft zwischen 1 cm und 10 m, bevorzugt zwischen 1 cm und 2 m, besonders bevorzugt zwischen 1 cm und 1 m, insbesondere zwischen 1 cm und 50 cm. Die normierte Unrundheit ist als der Quotient der Unrundheit und des äquivalenten Durchmessers der Gitterzelle definiert. Vorzugsweise beträgt die normierte Unrundheit größer oder gleich 0 und weniger als 100, bevorzugt größer oder gleich 0 und weniger als 10, insbesondere größer oder gleich 0 und weniger als 5. Beispielhaft ist in den Skizzen in Figur 12a, 12b und 13a die Unrundheit einzelner Gitterzellen eingezeichnet.

Die Querschnittsversperrung der Elektroden liegt vorteilhaft zwischen 1 % und 50 %, bevorzugt zwischen 1 % und 40 %, besonders bevorzugt zwischen 1 % und 30 %, insbesondere zwischen 1 % und 20 %.

Die spezifische Oberfläche von gitterförmigen Elektroden, d.h. der Quotient zwischen dem Umfang der Elektrode (d.h. die Länge der Kontaktlinie zwischen der Elektrode und der Schüttung in einer vertikalen Projektion des Reaktors) und dem Querschnitt der Schüttung, beträgt vorteilhaft 0,01 bis 500 m²/m³, bevorzugt 0,1 bis 100 m²/m³, weiter bevorzugt 1 bis 50 m²/m³, insbesondere 2 bis 20 m²/m³.

Der Werkstoff der Elektroden, d.h. Stege und Elektrodenplatten, ist vorteilhaft Eisen, Gusseisen oder eine Stahllegierung, Kupfer oder eine Legierung auf Kupferbasis, Nickel oder eine Legierung auf Nickelbasis, ein Refraktärmetall oder eine Legierung auf Basis von Refraktärmetallen und/oder eine elektrisch leitfähige Keramik. Insbesondere bestehen die Stege aus einer Stahllegierung, beispielsweise mit der Werkstoffnummer 1.0401, 1.4541, 1.4571, 1.4841, 1.4852, 1.4876 nach DIN EN10027-2 (Ausgabedatum 2015-07), aus Nickelbasis-Legierungen, beispielsweise mit der Werkstoffnummer 2.4816, 2.4642, aus Ti, insbesondere Legierungen mit der Werkstoffnummer 3.7025, 3.7035, 3.7164, 3.7165, 3.7194, 3.7235. Innerhalb der Refraktärmetalle sind Zr, Hf, V, Nb, Ta, Cr, Mo, W oder Legierungen hieraus besonders vorteilhaft; bevorzugt Mo, W und/oder Nb oder Legierungen hieraus, insbesondere Molybdän und Wolfram oder Legierungen hieraus. Ferner können Stege Keramiken wie Siliziumcarbid und/oder Kohlenstoff, z.B. Grafit, enthalten, wobei die Keramiken monolithische oder faserverstärkte Verbundwerkstoffe (z.B. Ceramic Matrix Compound, CMC, z.B. Carbon Fiber Composite, CFC) sein können.

Vorteilhaft wird das Material der Elektroden in Abhängigkeit von der Einsatzstemperatur gewählt. Stahl wird vorteilhaft in einem Temperaturbereich von -50 bis 1250°C, bevorzugt -50 bis 1000°C, weiter bevorzugt -50 bis 750°C, insbesondere -50 bis 500°C, gewählt. Molybdän wird vorteilhaft in einem Temperaturbereich von -50 bis 1800°C, bevorzugt -50 bis 1400°C, insbesondere -50 bis 1300°C gewählt. Kohlenstofffaserverstärkter Kohlenstoff wird vorteilhaft in einem Temperaturbereich von -50 bis 2000°C, bevorzugt -50 bis 1600°C, insbesondere -50 bis 1300°C, gewählt.

Bei speziellen Anwendung können die Elektroden auch aus mehreren Materialien bestehen. Bei der Verwendung von mehreren Materialien wird vorteilhaft die Elektrode in der Höhe in Abschnitte aus unterschiedlichen Materialien eingeteilt. Die Materialauswahl in den unterschiedlichen Zonen richtet sich vorteilhaft nach den folgenden Kriterien: Temperaturbeständigkeit, elektrische Leitfähigkeit, Kosten. Vorteilhaft sind die Segmente aus unterschiedlichen Materialien kraftschlüssig oder stoffschlüssig miteinander verbunden. Vorteilhaft sind die Verbindungen zwischen den Segmenten glatt gestaltet.

Elektroden können vorteilhaft als Vollelektroden oder als Hohlelektroden ausgeführt sein. Bei Vollelektroden sind vorteilhaft, je nach Bauart, die Elektrodenstäbe, die Elektrodenstege und / oder die Elektrodenplatten Vollkörper. Bei Hohlelektroden sind vorteilhaft, je nach Bauart, die Elektrodenstäbe, die Elektrodenstege und / oder die Elektrodenplatten Hohlkörper. Die Hohlräume innerhalb der Elektroden können vorteilhaft Kanäle bilden, die zur Einleitung gasförmiger Ströme in die Reaktionszone oder zum Abzug gasförmiger Ströme aus der Reaktionszone nutzbar sind. Die Wände der Hohlelektroden sind vorteilhaft aus geschlitzten Blechen, Lochblechen, Streckmetallgittern oder Gittergeweben aufgebaut.

Speichenförmige Gitterelektroden gemäß Figur 13a und Figur 13b:
Das speichenförmige Gitter weist vorteilhaft Elektrodenstege auf, vorteilhaft 2 bis 30 Elektrodenstege, bevorzugt 3 bis 24 Elektrodenstege, insbesondere 4 bis 18 Elektrodenstege. An jedem dieser Elektrodenstege sind vorteilhaft 1 bis 100 Elektrodenplatten befestigt, bevorzugt 2 bis 50, insbesondere 4 bis 20.

Die Länge der Stege beträgt vorteilhaft zwischen 1 cm und 1000 cm, bevorzugt zwischen 10 cm und 500 cm, insbesondere zwischen 30 cm und 300 cm. Die Höhe der Stege beträgt vorteilhaft zwischen 1 cm und 200 cm, bevorzugt zwischen 5 cm und 100 cm, insbesondere zwischen 10 cm und 50 cm. Die Dicke der Stege (an der dicksten Stelle) beträgt vorteilhaft zwischen 0,1 mm und 200 mm, bevorzugt zwischen 1 mm und 100 mm.

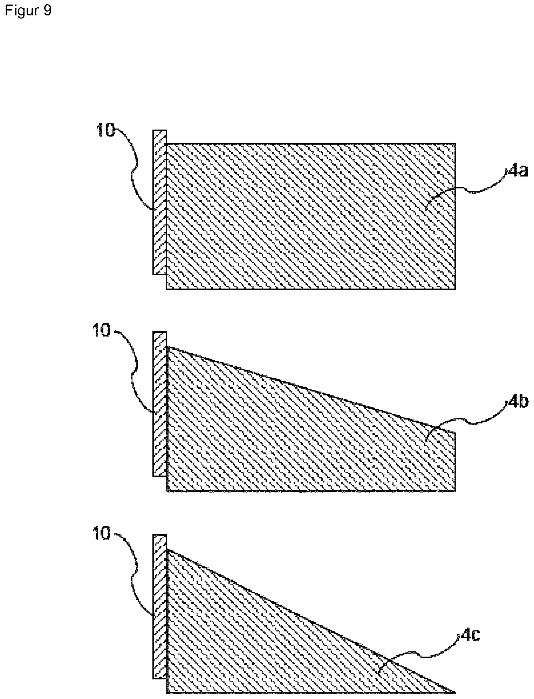

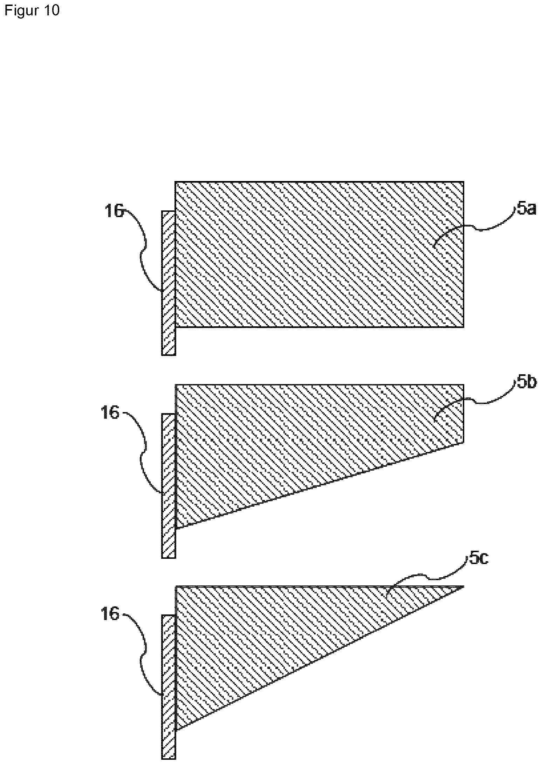

Das Seitenprofil der Stege und der Elektrodenlatten ist vorteilhaft rechteckig, trapezförmig oder dreieckig (Figur 9, Figur 10), wobei auch andere geometrische Formen, z.B. abgerundete, denkbar sind. Vorteilhaft sind die unteren Kanten der Stege und Platten in der oberen Elektrode und die oberen Kanten der Stege und Platten in der unteren Elektrode horizontal (Figur 9, Figur 10).

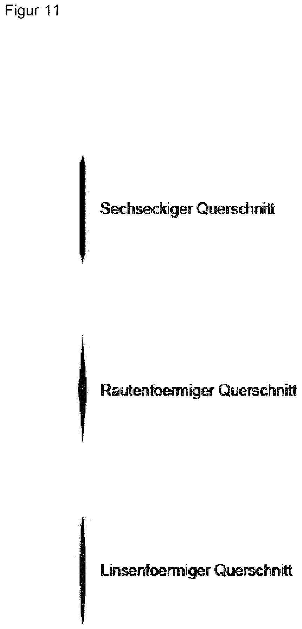

Der Querschnitt der Stege und der Elektrodenplatten ist vorteilhaft linsenförmig, rautenförmig oder sechseckig (Figur 11). Dabei laufen vorteilhaft das obere und das untere Ende der Stege spitz zu. Die Dicke einer Stege oder einer Elektrodenplatte am oberen und am unteren Ende (an den Spitzen) liegt vorteilhaft zwischen 0,001 mm und 10 mm, bevorzugt zwischen 0,001 mm und 5 mm, insbesondere zwischen 0,001 mm und 1 mm.

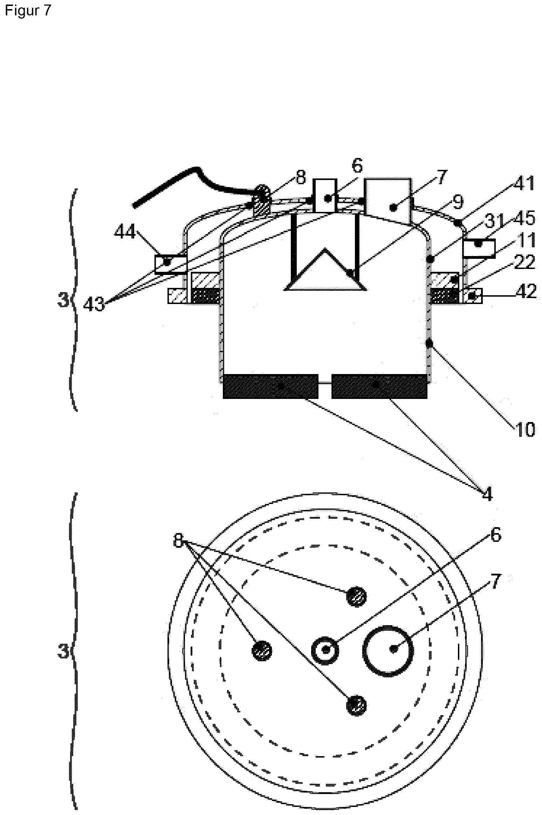

Das Profil der Stege und der Elektrodenplatten ist in der Draufsicht vorteilhaft gerade, sägezahnförmig oder wellenförmig. Wellenförmige Profile sind vorteilhaft sinusförmig oder rechteckförmig (Figur 7). Bei sägezahn- und wellenförmigen Profilen beträgt die Breite eines Zahns oder einer Welle vorteilhaft 1 cm bis 200 cm, bevorzugt 1 cm bis 100 cm, weiter bevorzugt 1 cm bis 50 cm, die Höhe des Zahns oder der Welle vorteilhaft 1 mm bis 200 mm, bevorzugt 1 mm bis 100 mm, weiter bevorzugt 1 mm bis 50 mm.

Die optionalen Elektrodenplatten sind mit den Stegen verbunden und in der Draufsicht des Reaktors vorteilhaft orthogonal zu den Stegen orientiert. Vorteilhaft sind die Elektrodenplatten entweder in der Mitte oder an einem Ende der Elektrodenplatten mit dem Steg verbunden. Vorteilhaft bildet die Kontaktfläche zwischen Elektrodenplatte und Steg das einzige Festlager für die Positionierung einer Elektrodenplatte. Entsprechend sind die beiden Enden oder ein Ende frei, d.h. es hat keine feste Verbindung mit anderen Elektrodenplatten oder anderen Stegen. Dadurch können sich die Elektrodenplatten spannungsfrei durch thermische Ausdehnung verformen.

Der Abstand zwischen den benachbarten Elektrodenplatten auf einem Steg beträgt vorteilhaft 1 bis 2000 mm, bevorzugt 5 bis 1000 mm, insbesondere 10 bis 500 mm.

Als Länge wird im Fall gebogener / nicht flacher Elektrodenplatten die Umfangslänge verstanden. Die Länge der Elektrodenplatten wird vorteilhaft vom äußeren Elektrodenring bis hin zur Reaktormitte linear über den Radius kleiner. Vorteilhaft ist die Länge jeder Platte auf einem Steg proportional zu ihrem Abstand vom Mittelpunkt des Reaktorquerschnitts; in diesem Fall wird die Länge der Elektrodenplatten als Länge der äußersten Elektrodenplatte verstanden. Die Länge der Elektrodenplatten beträgt vorteilhaft 1 cm bis 1000 cm, bevorzugt 2 cm bis 500 cm, weiter bevorzugt 5 cm bis 200 cm, insbesondere 10 cm bis 100 cm. Die Höhe der Elektrodenplatten beträgt vorteilhaft 1 cm bis 200 cm, bevorzugt 2 cm bis 100 cm, weiter bevorzugt 5 cm bis 50 cm, insbesondere 10 cm bis 50 cm. Die Dicke der einzelnen Elektrodenplatten auf einem Steg ist konstant. Die Dicke der Elektrodenplatten (an der dicksten Stelle), Gitterstärke, beträgt vorteilhaft 0,1 mm bis 100 mm, bevorzugt 1 mm bis 50 mm. Das Verhältnis Höhe zu Dicke der Elektrodenplatten beträgt vorteilhaft 1 bis 500, bevorzugt 2 bis 250, weiter bevorzugt 5 bis 100, insbesondere 10 bis 50.

Bei den speichenförmigen Gittern verlaufen die Elektrodenstege im Inneren des Reaktors vorteilhaft sternförmig. Vorteilhaft sind die einzelnen Elektrodenstege nicht miteinander verbunden. Die Elektrodenstege sind vorteilhaft an ihrem äußeren Ende mit der Reaktorhaube oder mit einem Verbindungselement, z. B. einer Schürze, an der Reaktorhaube verbunden. Vorteilhaft ist das andere Ende der Elektrodenstege frei, d.h. es hat keine feste Verbindung zu anderen Elektrodenstegen. Vorteilhaft bildet die Kontaktfläche zwischen Elektrodensteg und oberem bzw. unteren Vorrichtungsabschnitt, z.B. der Haube, bzw. einem Verbindungselement, z.B. der Schürze, das einzige Festlager, sog. Ein-Festlager, für die Positionierung eines Elektrodenstegs. Entsprechend ist das andere Ende des Elektrodenstegs frei, so dass der Elektrodensteg spannungsfrei durch thermische Ausdehnung verformt werden kann.

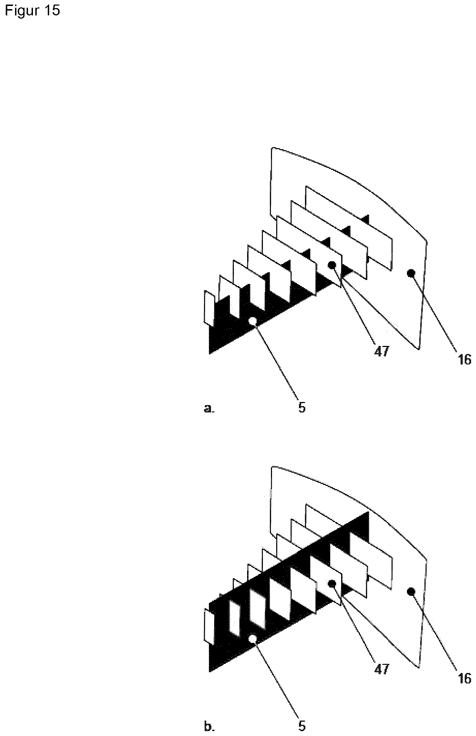

Die obere und die untere Kante von Stegen und Elektrodenplatten sind vorteilhaft gegeneinander versetzt. Durch die versetzten Kanten der Stege und der Platten werden Knotenpunkte vermieden, die sonst zur Stagnation der Schüttung führen könnten. Figur 15 zeigt beispielhaft bevorzugte Varianten für die untere Elektrode. Dargestellt ist jeweils ein Gittersegment, das einem einzelnen Steg zugeordnet ist. In der Variante gemäß Figur 15a ist die obere Kante der Elektrodenplatten höher als die obere Kante des Stegs angeordnet. In der Variante gemäß Figur 15b ist die obere Kante der Elektrodenplatten tiefer als die obere Kante des Stegs angeordnet. Der Versatz zwischen der oberen Kante der Elektrodenplatten und der oberen Kante der Stege ist vorteilhaft -500 mm bis 500 mm, bevorzugt -200 mm bis 200 mm, besonders bevorzugt -100 mm bis 100 mm. Negative Werte bedeuten, dass die obere Kante der Elektrodenplatten tiefer als die obere Kante der Stege angeordnet ist. Der Versatz zwischen der unteren Kante der Elektrodenplatten und der unteren Kante der Stege ist vorteilhaft -500 mm bis 500 mm, bevorzugt -200 mm bis 200 mm, besonders bevorzugt -100 mm bis 100 mm. Negative Werte bedeuten, dass die obere Kante der Elektrodenplatten tiefer als die obere Kante der Stege angeordnet ist.

Fraktal skalierte Gitterelektroden gemäß Figur 14a und Figur 14b:
Das Gitter aus konzentrischen Ringen (fraktal skalierte Elektrode) weist vorteilhaft Elektrodenstege, die annährend sternförmig verlaufen, und Elektrodenplatten, die als kreisbogenförmige Segmente ausgebildet sind, auf. Die obere und untere Kante der Stege und der Elektrodenplatten sind vorteilhaft in der Höhe gegeneinander versetzt. Die Stege sind auf beiden Seiten mit den Elektrodenplatten verbunden, wobei die Elektrodenplatten innerhalb eines Kreissegmentes durchgängig sind, beispielsweise 1/4 Kreis in Figur 14a und 1/6 Kreis in Figur 14b. Die Anzahl der Stege nimmt vom inneren nach außen zu. Die Stege des äußeren Ringes sind an der Reaktorhaube befestigt. Die Anzahl und Anordnung der Stege folgt der folgenden Regel: Der Kern des Gitters hat den Durchmesser 2*s, besitzt keine Stege und wird als Ring 1 gezählt. Die Rekursionsformel für den Aufbau weiterer Ringe lautet: "Der Ring i hat den Außendurchmesser 2*i*s und besitzt n*i gleichmäßig über die Winkelkoordinate verteilte Stege. In jedem geraden Ring sind die Stege um π/(n*i) rad im Uhrzeigersinn verdreht". s bezeichnet die Ringbreite. n ist eine natürliche Zahl und wird als Basis der Rekursion bezeichnet. Die Ringbreite s beträgt vorteilhaft 1 bis 2000 mm, bevorzugt 5 bis 1000 mm, insbesondere 10 bis 500 mm. n ist vorteilhaft eine Zahl zwischen 2 und 30, bevorzugt eine Zahl zwischen 2 und 20, insbesondere eine Zahl zwischen 2 und 10. In der Figur 14a ist ein Gitter mit Basis 4 und in der Figur 14b ist ein Gitter mit Basis 6 abgebildet. Allgemein werden Gitterstrukturen, die gemäß einer Rekursionsformel in ihrer Ausdehnung skalierbar sind, als fraktal skalierte Strukturen bezeichnet.

Bei den fraktal skalierten Gittern verlaufen die Elektrodenstege im Inneren des Reaktors vorteilhaft sternförmig. Vorteilhaft sind die kreisbogenförmigen benachbarten Elektrodenplatten teilweise bzw. segmentweise nicht miteinander verbunden. Das Gitter teilt sich demnach vorteilhaft in Segmente auf, vorteilhaft 2 bis 30 Segmente, bevorzugt 2 bis 20 Segmente. Die äußeren Elektrodenstege sind vorteilhaft an ihrem äußeren Ende mit der Reaktorhaube oder mit dem Verbindungselement, z.B. einer Schürze, an der Reaktorhaube verbunden. Vorteilhaft bildet die Kontaktfläche zwischen den Elektrodenstegen und dem oberen bzw. unteren Vorrichtungsabschnitt, z.B. der Haube, bzw. dem Verbindungselement, z.B. einer Schürze, das einzige Festlager, sog. Ein-Festlager, für die Positionierung eines Gittersegmentes. So kann das Gittersegment spannungsfrei, d.h. ohne Berührung benachbarter Gittersegmente, durch thermische Ausdehnung verformt werden.

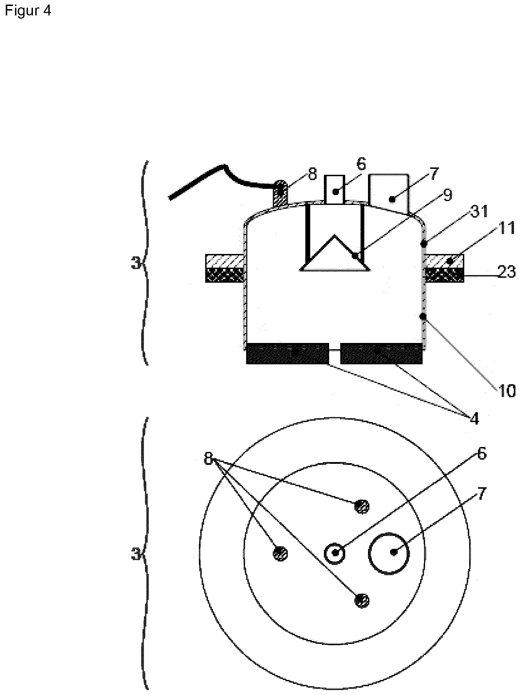

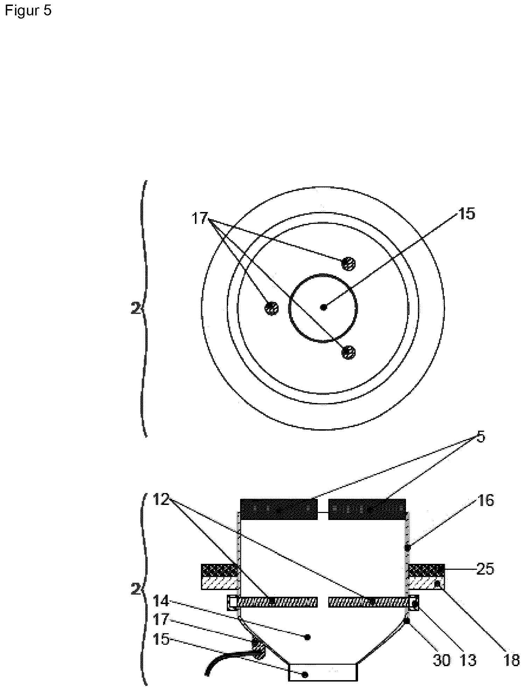

Der obere und der untere Abschnitt des Reaktorgehäuses bilden vorteilhaft jeweils die Kontakte für die obere und die untere Elektrode. Die Elektroden werden vorteilhaft über die stirnseitigen Abschnitte des Reaktorgehäuses, auch Reaktorhauben genannt, kontaktiert (siehe Figur 4 und Figur 5). Die Reaktorhauben weisen vorteilhaft einen oder mehrere elektrische Anschlüsse, (8) und (17), bevorzugt einen bis drei Anschlüsse, an der Außenseite auf.

Optional weisen die Reaktorhauben demnach Verbindungselemente, z.B. eine Schürze (10), (16) auf, die in den mittleren Reaktorabschnitt hineinragt; wobei unter dem Begriff "Schürze" eine Fortsetzung der Haube auf der Innenseite der Dichtfläche zur Seitenwand (11), (18) verstanden wird. Vorteilhaft sind die Elektroden an der Schürze der Haube angeschlossen. Das Kontaktieren zwischen der Reaktorhaube und der Elektrode kann durch eine stoffschlüssige Verbindung, beispielsweise Schweißen oder Löten, durch eine kraftschlüssige Verbindung, beispielsweise Verschrauben oder Klemmen oder durch eine formschlüssige Verbindung, beispielsweise über Verzahnung, Nut und Zapfen oder über Stift und Bolzen ausgeführt werden. Die bevorzugte Art der Verbindung wird durch den Werkstoff der Elektrodenstege bestimmt.

Metallische Elektrodenstege werden vorzugsweise mit der Haube verschweißt oder verlötet. Nichtmetallische Elektrodenstege werden vorzugsweise über eine kombinierte formschlüssige und kraft- oder stoffschlüssige Verbindung mit der Haube verbunden, beispielsweise eine Nut- und-Feder Verbindung kombiniert mit einer Schraubverbindung, mit einer Nietverbindung oder mit einer Klebeverbindung.

Bei den sternförmigen und den fraktal skalierten Gittern sind die Elektrodenstege vorteilhaft an ihrem äußeren Ende mit der Reaktorhaube oder mit der Schürze der Reaktorhaube verbunden.

Die Kontaktfläche zwischen der Elektrode und dem oberen bzw. unteren Vorrichtungsabschnitt, der Reaktorhaube, oder dem an der Haube kontaktierten Verbindungselement, z.B. einer Schürze, beträgt vorteilhaft zwischen 0,1 cm² und 10000 cm², bevorzugt zwischen 1 cm² und 5000 cm², insbesondere zwischen 10 cm² und 1000 cm². Unter Verwendung eines Verbindungselements, z.B. einer Schürze, beträgt die Kontaktfläche zwischen der Reaktorhaube und dem an der Haube kontaktierten Verbindungselement vorteilhaft zwischen 0,05 cm² und 200000 cm², bevorzugt zwischen 0,5 cm² und 50000 cm², insbesondere zwischen 50 cm² und 10000 cm².

Vorteilhaft liegt die Temperatur an der Kontaktfläche zwischen dem oberen Vorrichtungsabschnitt und dem Verbindungselement vorteilhaft kleiner als 600°C, bevorzugt kleiner als 450°C, besonders bevorzugt kleiner als 150°C, vorteilhaft im Bereich 0 bis 600°C, bevorzugt 10 bis 450°C.

Das Verhältnis der Querschnittsfläche der Verbindungselemente, z.B. einer Schürze zur Querschnittsfläche der Feststoffpackung beträgt vorteilhaft 0,001 bis 0,2 (0,1% bis 20%), bevorzugt 0,002 bis 0,1 (0,2% bis 10%), besonders bevorzugt 0,5% bis 5%. Das Verhältnis der Querschnittsfläche der stromführenden Haube zur Querschnittsfläche der Feststoffpackung beträgt vorteilhaft 0,001 bis 0,2 (0,1% bis 20%), bevorzugt 0,002 bis 0,1 (0,2% bis 10%), besonders bevorzugt 0,005 bis 0,05 (0,5% bis 5%).

In der Hauben-Elektroden-Einheit wird vorteilhaft weniger als 5 %, bevorzugt weniger als 2 %, besonders bevorzugt weniger als 1%, insbesondere weniger als 0,1% der insgesamt eingetragenen elektrischen Energie dissipiert. Bevorzugt liegt der Bereich der dissipierten Energie bei 0 bis 5 %, bevorzugt bei 0 bis 2 %, insbesondere bei 0 bis 1 %. Dadurch kann die elektrische Energie annähernd vollständig für die Beheizung der Packung zwischen den Elektroden genutzt. Unter "dissipierte Energie" wird die durch den Ohmschen Widerstand der Strecke in Wärmeenergie umgewandelte elektrische Energie verstanden. Die geringe Energiedissipation wird durch den niedrigen Ohmschen Widerstand der Hauben-Elektroden-Einheit erzielt. Der Ohmsche Widerstand zwischen zwei beliebigen Punkten der Hauben-Elektroden- Einheit beträgt vorteilhaft 10⁻¹²Ω bis 10⁻³Ω, bevorzugt 10⁻¹²Ω bis 10⁻⁵Ω, insbesondere 10⁻¹²Ω bis 10⁻⁷Ω. Der Ohmsche Widerstand der Hauben-Elektroden-Einheit wird durch die Werkstoffauswahl und die Dimensionierung der Hauben-Elektroden-Einheit erreicht. Für das Reaktionssystem Methanpyrolyse ist eine konkrete Dimensionierung im Beispiel beschrieben.

Der drucktragende Reaktormantel besteht vorteilhaft aus einem oberen Reaktorabschnitt (3), einem mittleren Reaktorabschnitt (1) und einem unteren Reaktorabschnitt (2). Bevorzugte Werkstoffe für den Reaktormantel sind Stahllegierungen, beispielsweise mit der Werkstoffnummer 1.4541, 1.4571. Die bevorzugte spezifische Leitfähigkeit der oberen und/oder unteren Vorrichtungsabschnitt liegt vorteilhaft zwischen 10⁵ S/m und 10⁸ S/m, bevorzugt zwischen 0,5 × 10⁶ S/m und 0,5 × 10⁸ S/m. Der spezifische Ohmsche Widerstand des äußeren drucktragenden Reaktormantels liegt vorteilhaft zwischen 10⁻⁸ Ωm und 10⁻⁵ Ωm, bevorzugt zwischen 2 10⁻⁷ Ωm und 2 10⁻⁶ Qm.

Beispielsweise enthalten der obere und der untere Abschnitt des Reaktors den stirnseitigen Abschluss des Reaktorgehäuses. Der obere Reaktorabschnitt ist vorteilhaft als Haube ausgestaltet. Der untere Reaktorabschnitt ist ebenso vorteilhaft als Haube ausgestaltet, insbesondere als konische Haube (Haube mit Auslaufkonus für das Feststoffgranulat).

Der obere Reaktorabschnitt, vorteilhaft die Reaktorhaube, besitzt vorteilhaft folgende Anschlüsse (siehe Figur 4): Elektrische Versorgung (8), Feststoffeinlass (6) und ggf. einen Verteiler (9) (z. B. in Form eines Kegelverteilers), einen oder mehrere Ausläufe für einen Produktstrom (7), vorteilhaft für einen gasförmigen Produktstrom, Zuführungen für Sensoren, beispielsweise für Temperaturmessung, Füllstandmessung, Konzentrationsmessung, Druckmessung.

Der untere Reaktorabschnitt, vorteilhaft die konische Reaktorhaube, besitzt vorteilhaft folgende Anschlüsse (siehe Figur 5): den Austrittskonus für einen Produktstrom (14), vorteilhaft für einen festen Produktstrom, die elektrische Versorgung für die untere Elektrode (17), mindestens einen Einlauf für Eduktströme, (12) bevorzugt für gasförmige Eduktströme, Zuführungen für Sensoren, beispielsweise für Temperaturmessung, Konzentrationsmessung, Druckmessung.

Der Eduktstrom oder ggf. mehrere Eduktströme werden vorteilhaft über einen Ringverteiler (13) oder mehrere am Umfang verteilte Zuführungen an der unteren Reaktorhaube eingeleitet. Über einen daran angeschlossenen Plattenverteiler (12) kann der Eduktstrom in der Zulaufebene gleichmäßig über den Querschnitt verteilt werden. Der optionale Plattenverteiler hat in der Draufsicht vorteilhaft dieselbe Form wie die Elektroden und befindet sich somit in derselben vertikalen Flucht zu den Elektroden. Alternative besteht der Verteiler aus einzelnen Elementen, welche jeweils vorteilhaft unterhalb von Elementen der Elektrode installiert werden.

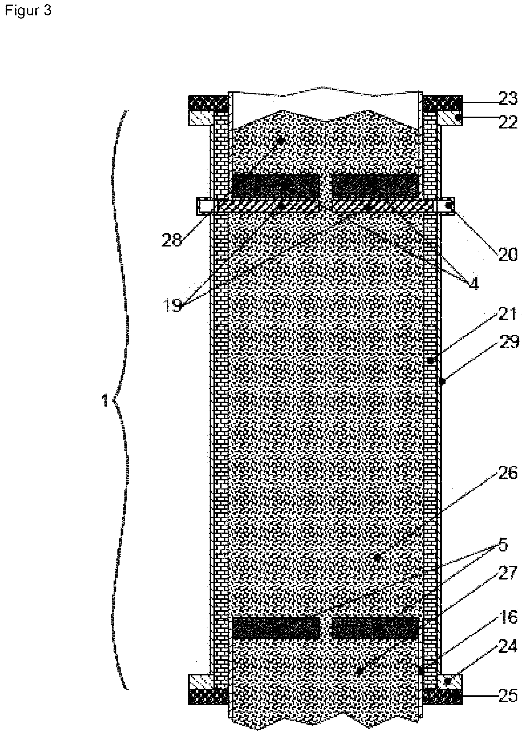

Der mittlere Reaktorabschnitt ist vorteilhaft zylindrisch oder prismatisch (siehe Figur 3). Dieser Bereich ist vorteilhaft mit einer bis ca. 2000°C, bevorzugt bis ca. 1700°C, bevorzugt bis ca. 1400°C, bevorzugt bis ca. 1200°C temperaturbeständigen und elektrisch isolierenden Auskleidung (21) ausgekleidet. Dieser Abschnitt definiert die Länge der beheizten Zone. Die Länge des mittleren Reaktorabschnitts beträgt vorteilhaft zwischen 0,25 m und 100 m, vorzugsweise zwischen 0,5 m und 50 m, besonders bevorzugt zwischen 0,75 m und 20 m, insbesondere zwischen 1 m und 10 m.

Der vertikale Abstand zwischen dem oberen Rand des mittleren Reaktorabschnitts und dem oberen Rand der Feststoffpackung beträgt vorteilhaft -2000 mm bis 2000 mm, bevorzugt -1000 mm bis 1000 mm, besonders bevorzugt -500 mm bis 500 mm. Negative Werte bedeuten, dass der obere Rand des mittleren Reaktorabschnitts tiefer als der obere Rand der Feststoffpackung angeordnet ist. Der vertikale Abstand zwischen dem oberen Rand des mittleren Reaktorabschnitts und dem unteren Rand der Elektrodenplatten an der oberen Elektrode beträgt vorteilhaft von 10 mm bis 5000 mm, bevorzugt von 100 mm bis 3000 mm, weiter bevorzugt von 200 mm bis 2000 mm. Der vertikale Abstand zwischen dem oberen Rand der Elektrodenplatten an der unteren Elektrode und dem Zulauf der gasförmigen Edukte beträgt vorteilhaft von 10 mm bis 5000 mm, bevorzugt von 100 mm bis 3000 mm, weiter bevorzugt von 200 mm bis 2000 mm.

Die elektrische Isolation übernimmt die Funktionen: (i) die Hauben gegen die Seitenwand des Reaktors, d.h. den mittleren Abschnitt der Reaktorhülle, zu isolieren und (ii) die Schüttung gegen die Seitenwand des Reaktors zu isolieren.

Typischerweise werden für die elektrisch isolierende Auskleidung Feuerfeststeine verwendet, die vorteilhaft Aluminiumoxid, Zirkonoxid sowie Mischoxide von Aluminium, Magnesium, Chrom, Silizium enthalten (siehe z.B. Dissertation von Patrick Gehre: Korrosions- und thermoschockbeständige Feuerfestmaterialien für Flugstromvergasungsanlagen auf Al2O3-Basis-Werkstoffen-wicklung und Korrosionsuntersuchungen. (TU Freiberg, 2013)).

Der mittlere Reaktorabschnitt ist zu den zwei Hauben hin vorteilhaft elektrisch isoliert. Beispielsweise wird hierfür jeweils ein Zwischenring aus elektrisch isolierendem Material (23) und (25) verwendet, der vorteilhaft gasdicht zwischen dem mittleren Reaktorabschnitt und der oberen Reaktorhaube (11) bzw. der unteren Reaktorhaube (18) geklemmt ist. Der Zwischenring besteht vorteilhaft aus emailliertem oder kunststoffbezogenem Metall, aus Kunststoff, beispielsweise PTFE oder PEEK oder aus gasdichter Keramik. Alternativ können Dichtringe aus elektrisch isolierendem Material, z.B. Glimmer direkt zwischen den Flanschen des mittleren Reaktorabschnitts und der Reaktorhauben geklemmt werden. Die Dicke des Zwischenrings beträgt vorteilhaft 2 mm bis 500 mm, bevorzugt 3 mm bis 200 mm, besonders bevorzugt 5 mm bis 100 mm.

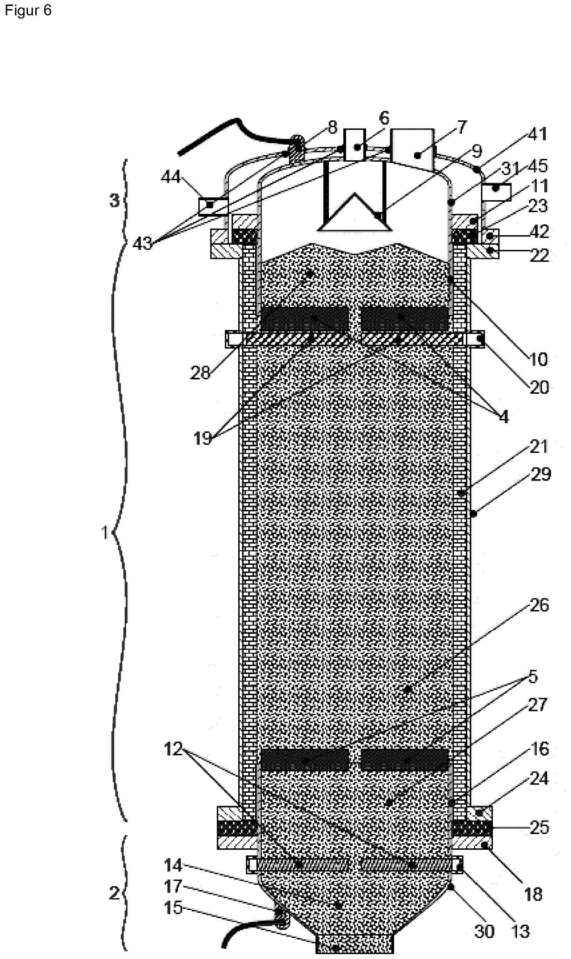

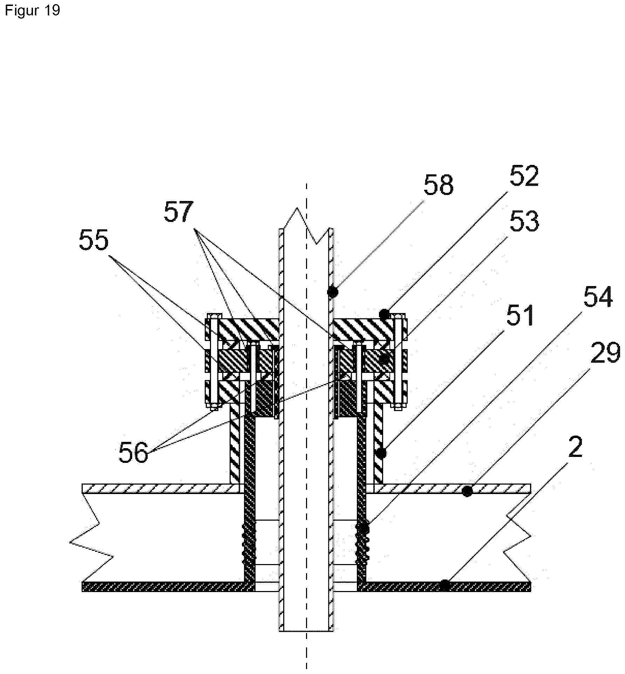

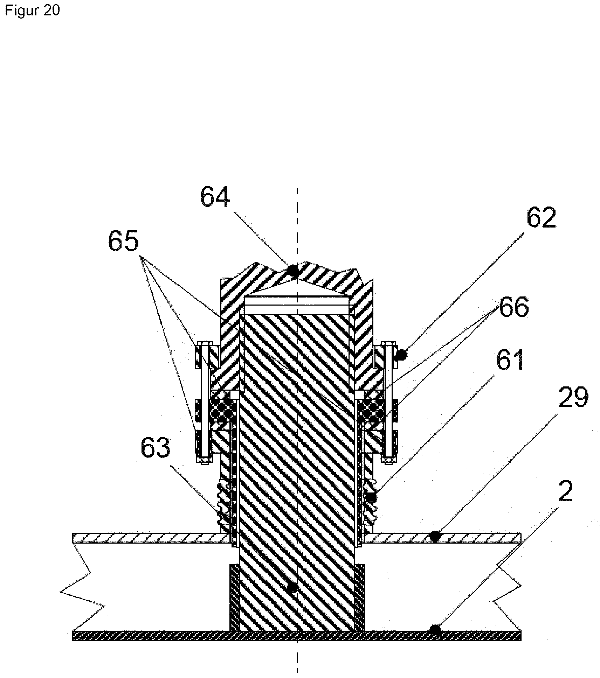

Vorteilhaft ist der obere und/oder untere Vorrichtungsabschnitt, z.B. die obere Haube, zweischalig ausgeführt (siehe Figur 6). Die äußere Schale der Haube (41) umgibt vorteilhaft die oben beschriebene Haube (3 oder 31), die vorteilhaft die innere Schale darstellt. Die innere Schale ist vorteilhaft das stromleitende Verbindungselement. Die äußere Schale ist vorteilhaft gegenüber der inneren Schale elektrisch isoliert. Die äußere Schale ist vorteilhaft mit dem mittleren Reaktorabschnitt (1) über einen Flansch (22 oder 42) verbunden. Zwischen den Flanschen (42) und (22) ist vorteilhaft eine Dichtung eingesetzt. Vorteilhaft ist die Dichtung eine Flachdichtung, eine Linsendichtung, eine O-Ringdichtung oder eine Schweißlippendichtung. Ferner enthält die äußere Schale (41) vorteilhaft die Durchführungen (43) für die Anschlüsse (6), (7), (8), die in die innere Schale der Haube führen. Die Durchführungen sind vorteilhaft lösbar, so dass die äußere Schale separat an den Reaktor angeflanscht oder entfernt werden kann (siehe Figur 19 und Figur 20).

Die vorteilhafte Ausgestaltung der Durchführungen durch eine zweischalige Haube ist dem Fachmann bekannt, beispielsweise in US 7,842,846 B2 beschrieben. In der vorliegenden Erfindung wird die Durchführung vorteilhaft zusätzlich elektrisch isolierend zwischen der inneren und der äußeren Schale ausgeführt. Figur 19 zeigt beispielhaft die Durchführung für den Eintritt des Partikelstroms (6) in den Reaktor. Der feste Partikelstrom wird vorteilhaft durch das Einleitrohr (58) geleitet, das mit einem Flansch (52) versehen ist. Das Einleitrohr besteht vorteilhaft aus einem metallischen Werkstoff, bevorzugt aus einem metallischen Rohr, das mit einer elektrisch isolierenden Schicht, beispielsweise Emaille, umhüllt ist. Dabei umfasst eine Durchführung vorteilhaft zwei konzentrische zylindrische Stutzen, wovon der äußere (51) an der äußeren Schale und der innere (54) an der inneren Schale der Haube befestigt ist. Vorteilhaft besitzt der innere Stutzen einen Kompensator, der eine Flexibilität des inneren Stutzens in Längsrichtung zulässt. Vorteilhaft endet der innere Stutzen in eine Gewindeplatte, dessen äußerer Umfang kleiner als der Umfang des äußeren Stutzens ist. Der äußere Stutzen endet vorteilhaft in einen Apparateflansch. Der innere und der äußere Flansch sind vorteilhaft gegen einen Zwischenring (53) gasdicht verspannt. Der innere Stutzen und der äußere Stutzen sind vorteilhaft elektrisch gegeneinander isoliert. Dafür wird vorteilhaft der Zwischenring aus Metall mit Flachdichtungen (55) aus elektrisch isolierendem Material, beispielsweise Glimmer oder Kunststoff, zwischen dem Flansch des Einleitrohres auf der einen Seite und dem Flansch des äußeren Stutzens und der Gewindeplatte des inneren Stutzens auf der anderen Seite geklemmt. Zwischen den Befestigungsschrauben und dem Zwischenring werden vorteilhaft Hülsen aus elektrisch isolierendem Material (57), beispielsweise Kunststoff oder Oxidkeramik, eingesetzt.

Alternativ kann der Zwischenring aus elektrisch isolierendem Material bestehen, beispielsweise Kunststoff, PEEK oder dicht gesinterte Oxidkeramik. Alternativ kann ein Zwischenring aus Metall mit einem elektrisch isolierenden Material überzogen sein, beispielsweise Emaille oder Kunststoff.

Vorteilhaft ist die Dichtung des Zwischenrings gegen den äußeren Stutzen eine Flachdichtung eine Linsendichtung, eine O-Ringdichtung oder eine Schweißlippendichtung.

Figur 20 zeigt beispielhaft die Durchführung der elektrischen Versorgungsleitung, die zur inneren Schale der Haube führt. Die Durchführung umfasst einen Stift (63), der mit der Außenseite der inneren Schale (2) verlötet oder verpresst ist. Der Stift ist mit einer Buchse (64), die an die elektrische Versorgung angeschlossen ist, über eine Schraub- oder Klemmverbindung verbunden. Die Buchse trägt am unteren Ende einen Bund. Der Stift ist lose in einer Keramikhülse (65) aus elektrisch isolierendem Material geführt. Die Hülse besteht vorteilhaft aus Oxidkeramik. Bevorzugt besteht die Hülse aus Metall und ist mit einer Schicht aus Emaille umhüllt. Die Keramikhülse ist ihrerseits in einem Rohrstutzen (61) geführt. Dieser Rohrstutzen ist an der äußeren Schale der Haube (27) angeschweißt. Der Rohrstutzen enthält vorteilhaft einen Kompensator und einen Anschweißflansch. Der Rohrstutzen (61), die Isolationshülse (65) und die Buchse (64) werden über einen Losflansch (62) geklemmt. Zwischen dem Rohrstutzen (61) und der Hülse (65) sowie zwischen der Hülse (65) und der Buchse (64) sind Flachdichtungen (66) eingelegt. Vorteilhaft bestehen die Flachdichtungen aus Glimmer. Alternativ können die Dichtungen als O-Ring-Dichtungen ausgeführt werden. Zwischen den Befestigungsschrauben und dem Flansch des äußeren Rohrstutzens werden vorteilhaft Hülsen aus elektrisch isolierendem Material (67), beispielsweise Kunststoff oder Oxidkeramik, eingesetzt.

Vorteilhaft enthält die äußere Schale der Haube gemäß der Figuren 6 und 7 Anschlüsse für den Eintritt (44) und den Austritt (45) eines Inertgasstroms, der beispielsweise Stickstoff, Argon, Kohlenstoffdioxid und/oder Wasserdampf enthält. Durch das Inertgas wird der Mantelraum zwischen der inneren und der äußeren Schale der Haube gespült. Vorteilhaft wird der Druck im Mantelraum geringfügig höher als der Druck im unmittelbar benachbarten Teil der Reaktionsstrecke eingestellt. Die Druckdifferenz zwischen dem Mantelraum und dem unmittelbar benachbarten Teil der Reaktionsstrecke beträgt vorteilhaft von 1 mbar bis 500 mbar, bevorzugt von 1 mbar bis 100 mbar, besonders bevorzugt von 1 mbar bis 50 mbar. Die Einstellung dieser Differenz ist dem Fachmann bekannt, beispielsweise in WO 2013017609 A1 beschrieben.

Die Reaktordimensionierung ist vom Reaktionssystem und der angestrebten Kapazität abhängig. Für das Reaktionssystem Methanpyrolyse ist eine konkrete Dimensionierung im Beispiel beschrieben.

Der erfindungsgemäße gepackte Reaktor enthält vorteilhaft eine regellose Schüttung fester Partikeln aus elektrisch leitfähigem Material. Die Schüttung kann homogen oder in der Höhe strukturiert sein. Eine homogene Schüttung kann vorteilhaft ein Festbett, ein Wanderbett oder ein Wirbelbett bilden, insbesondere ein Wanderbett. Eine in der Höhe strukturierte Schüttung bildet vorteilhaft im unteren Abschnitt ein Festbett und im oberen Abschnitt ein Wirbelbett. Alternativ bildet die strukturierte Schüttung vorteilhaft im unteren Abschnitt ein Wanderbett und im oberen Abschnitt ein Wirbelbett. Alternativ enthält die Feststoffpackung vorteilhaft strukturierte Einbauten aus elektrisch leitfähigem Material, beispielsweise Wabenmonolithe, gekreuzte Platten wie Sulzer Mellapack-Packungen, statische Mischer wie Sulzer SMX-Mischer oder lose Partikel. Die strukturierten Einbauten enthalten vorzugsweise Metall, Siliziumcarbid oder Kohlenstoff und bilden durchgängig elektrisch leitfähige Pfade zwischen den Elektroden. Optional ist das Hohlvolumen der strukturierten Einbauten ganz oder teilweise gefüllt mit festen Partikeln. Die festen Partikel bilden vorteilhaft ein Festbett, ein Wanderbett, ein Wirbelbett oder ein Rieselbett. Die Partikel können vorteilhaft aus elektrisch leitfähigen und / oder aus elektrisch isolierenden Materialien bestehen.

Als temperaturbeständige, elektrisch leitfähige strukturierte Packungen kommen Einbauten aus Metall und/oder elektrisch leitfähige Keramiken, beispielsweise Siliziumcarbid, Kohlenstoff und diese Stoffe enthaltende Verbundmaterialien in Betracht.

Unter "Wärmeintegration" wird in der vorliegenden Anmeldung ein Gegenstromwärmetausch zwischen einem heißen und einem kalten Stoffstrom eines Prozesses verstanden, der bewirkt, dass die fühlbare Wärme des heißen Stoffstroms genutzt wird, um den kalten Stoffstrom aufzuheizen. Dadurch wird eine Temperaturänderung der beteiligten Stoffströme erreicht ohne Wärmeströme über die Prozessgrenzen hinweg zu übertragen.

Der erfindungsgemäße Reaktor bietet vorteilhafte Merkmale für die Realisierung einer wärmeintegrierten Fahrweise für endotherme Hochtemperaturprozesse an. Diese Merkmale sind insbesondere (i) die Gegenstromführung zwischen einem Feststoffpartikel- und einem Gasstrom, und (ii) die Justierung der Position der beheizten Zone im Inneren der Reaktionsstrecke, wodurch am oberen Ende eine Wärmeübertragungszone für den Wärmerücktausch zwischen dem heißen Produktgas und dem kalten Strom von Feststoffpartikeln und am unteren Ende eine Wärmeübertragungszone für den Wärmerücktausch zwischen dem festen Produktstrom und dem kalten Gaszulauf entstehen.

Die Effizienz der Wärmeintegration wird durch die Minimierung des Wärmetransportwiderstandes zwischen dem Gas und der Feststoffpackung durch ein günstiges Verhältnis der Wärmekapazitätsströme der gasförmigen und der festen Reaktionsmedien in den Wärmeübertragungszonen erzielt. Ein Maß für die Effizienz der Wärmeintegration ist der Wirkungsgrad der Wärmeintegration: η=(Temperatur der Reaktionszone ― Gasaustrittstemperatur des Hauptstroms)/(Temperatur der Reaktionszone-Feststoffeintrittstemperatur).

Der Wirkungsgrad der Wärmeintegration liegt vorteilhaft bei größer als 60%, bevorzugt bei größer als 65%, weiter bevorzugt größer als 70%, weiter bevorzugt größer als 80%, weiter bevorzugt größer als 90%, insbesondere größer als 95%. Der Wirkungsgrad der Wärmeintegration liegt vorteilhaft im Bereich von 60 bis 99,5 %.

Die Länge der Wärmübertragungseinheit wird vorwiegend durch die Parameter (i) Eigenschaften der Schüttungspartikeln wie Partikelgröße, Wärmeleitfähigkeit, Emissionskoeffizient, (ii) Eigenschaften der Gasphase wie Leitfähigkeit und (iii) Betriebsbedingungen wie Druck, Temperatur, Durchsatz bestimmt.

Der Wärmetransportwiderstand beim Wärmeaustausch zwischen dem Gas und der Feststoffpackung in den Wärmeübertragungszonen weist vorteilhaft eine Länge der Übertragungseinheiten oder Height-of-Transfer Units (HTU) von 0,01 bis 5 m, bevorzugt 0,02 bis 3 m, besonders bevorzugt von 0,05 bis 2 m, insbesondere von 0,1 bis 1 m auf. Die Definition der HTU wird übernommen von http://elib.uni-stuttgart.de/bitstream/11682/2350/1/docu_FU.pdf Seite 74.

Der Wärmekapazitätsstrom ist das Produkt aus Massenstrom und spezifische Wärmekapazität eines Stoffstroms. Vorteilhaft beträgt das Verhältnis der Wärmekapazitätsströme zwischen dem gasförmigen Prozessstrom und dem festen Prozessstrom von 0,5 bis 2, bevorzugt von 0,75 bis 1,5, besonders bevorzugt von 0,85 bis 1,2, insbesondere von 0,9 bis 1,1. Das Verhältnis der Wärmekapazitätsströme wird über die Zulaufströme und ggf. über die Seiteneinspeisung oder den Seitenabzug von Teilströmen eingestellt.

Am oberen Ende der Reaktionsstrecke, insbesondere am oberen Rand der Feststoff-Packung, beträgt die Differenz zwischen der Austrittstemperatur des gasförmigen Produktstroms und des Zulaufstroms aus Feststoffpartikeln vorteilhaft von 0 K bis 500 K, bevorzugt von 0 K bis 300 K, weiter bevorzugt von 0 K bis 200 K, insbesondere von 0 K bis 100 K.

Am unteren Ende der Reaktionsstrecke, insbesondere an der Stelle, an der der feste Produktstrom aus dem Reaktor abgezogen wird, beträgt die Differenz zwischen der Austrittstemperatur des festen Produktstroms und des gasförmigen Zulaufstroms vorteilhaft von 0 K bis 500 K, bevorzugt von 0 K bis 300 K, weiter bevorzugt von 0 K bis 200 K, insbesondere von 0 K bis 100 K.

Der mittlere Reaktorabschnitt besitzt vorteilhaft einen Anschluss für einen seitlichen Gasabzug. Der Seitenabzug ist vorteilhaft eine Öffnung zwischen dem Wanderbett und einem gasdurchlässigen, vom Wanderbett isolierten Bereich im Reaktor, der mit einer separaten Öffnung im Reaktorgehäuse verbunden ist. Die Öffnung des Seitenabzugs zur Reaktionsstrecke kann vorteilhaft durchgängig oder durch feste Kanäle (19) in Segmente unterteilt sein. Bevorzugt sind die festen Kanäle (19) in den Elektrodenstegen integriert. Die Kanäle können zu einem Ringsammler (20) zusammengeführt werden. Über diesen Seitenabzug kann vorteilhaft ein Teil des Reaktionsgases aus der Reaktionsstrecke abgezogen werden.

Der Seitenabzug ist vorteilhaft ein in der Höhe begrenzter Bereich am oberen Ende der beheizten Zone. Besonders bevorzugt befindet sich der Seitenabzug im Bezug auf die Position der oberen Elektrode wie folgt:
Die Position des unteren Endes des Seitenabzugs im Bezug zu dem unteren Ende der oberen Elektrode ist vorteilhaft -2000 bis 2000 mm, bevorzugt -1000 bis 1000 mm, weiter bevorzugt - 500 bis 500 mm, insbesondere -500 bis 0 mm. Negative Werte bedeuten, dass das untere Ende des Seitenabzugs tiefer liegt als das untere Ende der oberen Elektrode.

Die Position des oberen Endes des Seitenabzugs im Bezug zu dem unteren Ende der oberen Elektrode ist vorteilhaft -2000 bis 3000 mm, bevorzugt -1000 bis 2000 mm, weiter bevorzugt - 500 bis 1000 mm, insbesondere 0 bis 1000 mm. Negative Werte bedeuten, dass das obere Ende des Seitenabzugs tiefer liegt als das untere Ende der oberen Elektrode.

Die Position des oberen Endes des Seitenabzugs im Bezug zu dem oberen Ende der mittleren Reaktionszone ist vorteilhaft -3000 bis -100 mm, bevorzugt -2000 bis -100 mm, weiter bevorzugt -1000 bis -100 mm, insbesondere -500 bis -100 mm. Negative Werte bedeuten, dass das obere Ende des Seitenabzugs tiefer liegt als das obere Ende der mittleren Reaktionszone.

Der Anteil des Gesamtvolumenstroms, der über den Seitenabzug geleitet wird ist vorteilhaft 0 bis 100 %, bevorzugt 0 bis 80 %, weiter bevorzugt 0 bis 60 %, insbesondere 0 bis 40 %.

Durch den Seitenabzug wird der Wärmekapazitätsstrom des gasförmigen Stroms in der oberen Wärmeübertragungszone reduziert und an den Wärmekapazitätsstrom des aufzuheizenden Feststoffstroms im Wanderbett angepasst, der im Gegenstrom dazu fließt. Der Seitenabzug wirkt sich auf die Position der oberen Wärmeübertragungszone, d.h. der Ort des Punktes mit dem betragsmäßig größten negativen Temperaturgradienten im Wanderbett, aus. Vorteilhaft liegt die Position der oberen Wärmeübertragungszone in einem Abstand von vorteilhaft 10 bis 3000 mm, bevorzugt 100 bis 2500 mm, weiter bevorzugt 200 bis 2000 mm, insbesondere 300 bis 2000 mm unterhalb des oberen Endes des Wanderbettes.

Ein weiterer Vorteil des Seitenabzugs ist, dass die Temperatur des abgezogenen Stroms in der Nähe der Maximaltemperatur liegt. Dank der hohen Temperatur kann dieser Strom in vielfältiger Weise effizient genutzt werden. Der Gasstrom des Seitenabzugs kann beispielsweise als Reaktionsgas in einer nachgeschalteten Reaktionsstufe (Bezug zu Kopplung Pyrolyse / Reserve Wassergas Shift Reaktion) verwendet werden.

Ein weiterer Vorteil des Seitenabzugs liegt darin, dass die Elektroden oberhalb der beheizten Zone in einem kälteren Temperaturbereich liegen. Somit können trotz sehr hoher Temperaturen in der beheizten Zone Materialien für die Elektroden gewählt werden, die nur in einem kälteren Temperaturbereich verwendbar sind.

Die Trägermaterialien des Produktionsbettes sind vorteilhaft temperaturbeständig im Bereich von 500 bis 2000°C, bevorzugt 1000 bis 1800°C, weiter bevorzugt 1300 bis 1800°C, besonders bevorzugt 1500 bis 1800°C, insbesondere 1600 bis 1800°C.

Die Trägermaterialien des Produktionsbettes sind vorteilhaft elektrisch leitfähig im Bereich zwischen 10 S/cm und 10⁵ S/cm.

Als temperaturbeständige Trägermaterialien, insbesondere für die Methanpyrolyse kommen vorteilhaft kohlenstoffhaltige Materialien, z.B. Koks, Siliciumcarbid und Borcarbid in Betracht. Gegebenenfalls sind die Träger mit katalytischen Materialien beschichtet. Diese Wärmeträgermaterialien können gegenüber dem darauf abgesetzten Kohlenstoff ein unterschiedliches Ausdehnungsvermögen aufweisen.

Die Granulatpartikel besitzen eine regelmäßige und/oder eine unregelmäßige geometrische Form. Regelmäßig geformte Partikel sind vorteilhaft kugelförmig oder zylindrisch.

Das Granulat besitzt vorteilhaft eine Körnung, d.h. einen Äquivalenzdurchmesser, der durch Siebung mit einer bestimmten Maschengröße bestimmbar ist, von 0,05 bis 100 mm, bevorzugt 0,1 bis 50 mm, weiter bevorzugt 0,2 bis 10 mm, insbesondere 0,5 bis 5 mm.

Ferner ist die Verwendung von kohlenstoffhaltigen Material, beispielsweise als Granulat, vorteilhaft. Unter einem kohlenstoffhaltigen Granulat ist in der vorliegenden Erfindung ein Material zu verstehen, das vorteilhaft aus festen Körnern besteht, die mindestens 50 Gew.-%, bevorzugt mindestens 80 Gew.-%, weiter bevorzugt mindestens 90 Gew.-% Kohlenstoff, insbesondere mindestens 98 Gew.-% Kohlenstoff aufweisen.

In dem erfindungsgemäßen Verfahren kann eine Vielzahl von unterschiedlichen kohlenstoffhaltigen Granulaten eingesetzt werden. Ein derartiges Granulat kann beispielsweise überwiegend aus Kohle, Koks, Koksgrus und/oder Mischungen hieraus bestehen. Ferner kann das kohlenstoffhaltige Granulat 0 bis 15 Gew.-% bezogen auf die Gesamtmasse des Granulats, bevorzugt 0 bis 5 Gew.-%, Metall, Metalloxid und/oder Keramik enthalten.

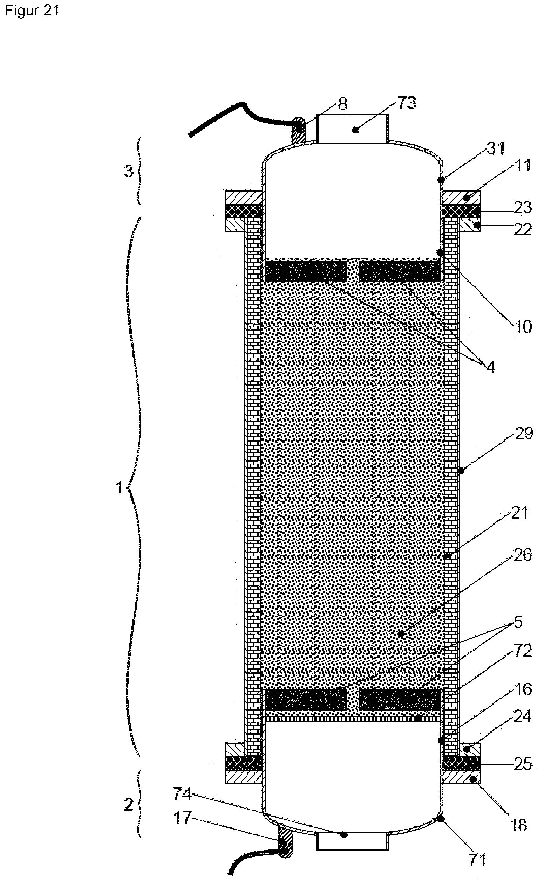

Eine vorteilhafte Variante des erfindungsgemäßen Reaktordesigns ist ein katalytischer Festbettreaktor mit direkter elektrischer Beheizung. Figur 21 zeigt eine Skizze des erfindungsgemäßen Reaktors. Der Reaktor ist vorteilhaft in mehrere Zonen aufgeteilt. Vorteilhaft gibt es von oben nach unten angeordnet: die Gaseinleitung (73), die obere Elektrode (4), die beheizte Zone, die untere Elektrode (5), den Austritt des gasförmigen Produktstroms (74).

Der Reaktor ist teilweise mit einer regellosen oder strukturierten Packung aus elektrisch leitfähigem Material gefüllt. Die Packung stützt sich auf den Katalysatorstuhl (72) ab, der seinerseits an einem Verbindungselement, z.B. einer Schürze, mit der unteren Reaktorhaube befestigt ist. Vorteilhaft sind die obere und die untere Elektrode (4) und (5) jeweils am oberen und am unteren Ende der Feststoffpackung angeordnet.

Unter dem Begriff Hochtemperaturprozesse sind unter anderem Pyrolysereaktionen, Dehydrierungsreaktionen, Reformierungsreaktionen zusammengefasst.

Erfindungsgemäß handelt es sich bei dem endothermen Hochtemperaturprozess bevorzugt um einen Prozess, dessen volumenspezifischer Energieverbrauch in der beheizten Zone größer als 0,5 MW/m³ ist, besonders bevorzugt größer 1 MW/m³, insbesondere größer als 2 MW/m³. Beispielsweise kann der Energieverbrauch zwischen 0,5 und 10 MW/m³ in der beheizten Zone liegen.

Bevorzugt werden folgende Hochtemperaturreaktionen in dem erfindungsgemäßen Wanderbettreaktor durchgeführt:
- die Herstellung von Synthesegas durch Reformierung von Kohlenwasserstoffen mit Wasserdampf und / oder Kohlenstoffdioxid, Koppelproduktion von Wasserstoff und Pyrolyse-Kohlenstoff durch die Pyrolyse von Kohlenwasserstoffen. Geeignete Trägermaterialien sind insbesondere kohlenstoffhaltige Granulate, Siliciumcarbid-haltige Granulate, nickelhaltige metallische Granulate.
- Herstellung von Blausäure aus Methan und Ammoniak oder aus Propan und Ammoniak. Geeignete Trägermaterialien sind insbesondere kohlenstoffhaltige Granulate.
- Herstellung von Olefinen durch Wasserdampfspaltung von Kohlenwasserstoffen. Geeignete Trägermaterialien sind insbesondere kohlenstoffhaltige Granulate, Siliciumcarbid-haltige Granulate.
- Kupplung von Methan zu Ethylen, Acetylen und zu Benzol.
- Herstellung von Olefinen durch die katalytische Dehydrierung von Alkanen, beispielsweise Propylen aus Propan oder Buten aus Butan. Geeignete Trägermaterialien sind insbesondere mit Dehydrierkatalsatoren beschichtete Siliciumcarbid-haltige Granulate oder eisenhaltige Formkörper.
- Herstellung von Styrol durch katalytische Dehydrierung von Ethylbenzol. Geeignete Trägermaterialien sind insbesondere mit Dehydrierkatalsatoren beschichtete Siliciumcarbid-haltige Granulate oder eisenhaltige Formkörper.
- Herstellung von Diolefinen durch die katalytische Dehydrierung von Alkanen oder Olefinen, beispielsweise Butadien aus Buten oder aus Butan. Geeignete Trägermaterialien sind insbesondere mit Dehydrierkatalsatoren beschichtete Siliciumcarbid-haltige Granulate oder eisenhaltige Formkörper.
- Aldehyde durch katalytische Dehydrierung von Alkoholen, beispielsweise wasserfreies Formaldehyd aus Methanol. Geeignete Trägermaterialien sind insbesondere silberhaltiges Granulat oder mit Dehydrierkatalsatoren beschichtete Siliciumcarbid-haltige Granulate oder eisenhaltige Formkörper.
- Herstellung von CO durch die Boudouard-Reaktion aus CO2 und Kohlenstoff. Geeignete Trägermaterialien sind insbesondere kohlenstoffhaltige Granulate.
- Herstellung von Wasserstoff und Sauerstoff durch katalytische Wasserthermolyse an katalytischen Kontakten. Geeignete Trägermaterialien sind insbesondere Siliciumcarbid-haltige oder eisenhaltige Granulate, die mit einem Spaltkontakt, beispielsweise einem Ferrit beschichtet sind.

Für die bevorzugten Varianten des erfindungsgemäßen Verfahrens sind die Bereiche der Sollwerte der Maximaltemperatur tabellarisch zusammengefasst:

| Reaktion | Sollwert der Maximaltemperatur | | | |
|---|---|---|---|---|
| | min [°C] | | max [°C] | |
| | Untere Grenze | Bevorzugte untere Grenze | Bevorzugte obere Grenze | Obere Grenze |
| Pyrolyse (Erdgas, Flüssiggas, Naphtha) | 800 | 1000 | 1700 | 1900 |
| Reformierung von Erdgas (Wasserdampf / CO2) | 600 | 750 | 1300 | 1500 |
| Alkan-Ammondehydrierung | 1000 | 1200 | 1700 | 1900 |
| Dampfspaltung (Steamcracking) | 600 | 750 | 1300 | 1500 |
| Kupplung von Methan zu C2-, C3-Kohlenwasserstofen | 500 | 600 | 1500 | 1800 |
| Dehydroaromatisierung, (Erdgas | 600 | 700 | 800 | 900 |
| Dehydrierung von Propan, Raffinat II oder Ethylbenzol | 450 | 500 | 650 | 700 |
| Dehydrierung von Buten zu Butadien | 350 | 450 | 700 | |
| Dehydrierung von Methanol zu Formaldehyd | 500 | 600 | 800 | 1100 |
| Boudouard-Reaktion | 450 | 500 | 1000 | 1300 |
| Thermolyse von Wasser zu H2 und O2 (Regeneration des Kontaktes) | 600 | 700 | 1100 | 1500 |

Vorteilhaft beträgt die Temperatur der oberen Elektrode mindestens 350°C, vorteilhaft im Bereich von 350 bis 1900°C.

Die Kontaktierung der Elektroden über die flächigen, stirnseitigen Abschnitte des Reaktorgehäuses oder einem daran befestigen Verbindungselement und zusätzlich ggf. die Verwendung refraktärer Metalle als Elektrodenmaterial ermöglicht die verlustarme Einleitung des elektrischen Stroms in die Reaktionsstrecke. Dank der großen Querschnittsflächen und der hohen spezifischen elektrischen Leitfähigkeit der Reaktorhauben sowie ggf. der Verbindungselemente ist die dort dissipierte elektrische Leistung vernachlässigbar gering. Dadurch werden die Anschlüsse, Durchführungen und Verbindungen in diesem Bereich, ohne aufwendige aktive Kühlung, auf einem moderaten Temperaturniveau gehalten. Dank der aufeinander angepassten Dimensionierung der Querschnittsflächen der Elektroden und der Verbindungselemente wird eine über den Querschnitt der Feststoffpackung gleichmäßige Verteilung des elektrischen Stroms erzielt.

Die Kontaktierung der Elektroden über den Umfang der Hauben und ggf. in Kombination mit der gitterförmigen Geometrie der Elektroden erlaubt eine gleichmäßige Einleitung des elektrischen Stroms in die Reaktionsstrecke. Ferner erlaubt die gitterförmige Geometrie der Elektroden die Strukturierung des Reaktorquerschnitts in kleine, gleichmäßige Bereiche. Dadurch ergeben sich günstige Voraussetzungen für eine rationale Skalierung und Anpassung des Reaktors an die geforderte Produktionskapazität.

Durch die vertikale Anordnung der Elektroden werden eine gleichmäßige Wärmefreisetzung und ein gleichmäßiger Umsatzverlauf entlang des beheizten Bereichs der Reaktionsstrecke ermöglicht. Die bevorzugte Ausführung der Elektroden mit stegförmigen Elektrodenstegen und damit verbundenen Elektrodenplatten weist eine hohe mechanische Festigkeit auf. Die Segmentierung der Elektroden und die einseitige Fixierung erlaubt eine ungehinderte thermische Ausdehnung der Elektroden.

Der hohe Schlankheitsgrad und die Profilierung der Elektrodenstege und der Elektrodenplatten mit spitzen Enden erlauben einen ungehinderten Fluss der Feststoffpartikeln im Wanderbett. Dadurch werden gleichmäßige Betriebsbedingungen über dem gesamten Querschnitt der Reaktionsstrecke gewährleistet.

Durch die Positionierung der Elektroden im Inneren der Packung entstehen oberhalb und unterhalb des elektrisch beheizten Bereichs der Packung zwei definierte Wärmeübertragungszonen, in denen eine interne Wärmerückführung erreicht werden kann. Dadurch besitzt der Reaktor die Voraussetzungen für eine vollständige Wärmeintegration.

Durch die Positionierung des oberen Randes der Feststoffpackung innerhalb des mittleren Reaktorabschnittes wird die Hochtemperaturzone zuverlässig in dem mechanisch und thermisch robusten Bereich des Reaktors begrenzt.

Durch die Aufteilung des Gehäuses auf drei Abschnitte wird die Montierbarkeit und die Zerlegbarkeit des Reaktors erleichtert. Dadurch ist es möglich, Verschleißteile auf einfache Weise auszutauschen sowie vorgefertigte Reaktorabschnitte für den Aufbau des Reaktors zu nutzen. Folglich werden die Wirtschaftlichkeit und die Fertigungsqualität des Reaktors verbessert.
Figur 1:
   Figur 1 zeigt die Skizze eines erfindungsgemäßen Wanderbettreaktors mit direkter elektrischer Beheizung.
   a. Längsschnitt durch den Reaktor.
   b. Querschnitt des Reaktors auf der Höhe der oberen Elektrode. In dieser Ansicht ist der Querschnitt des Verbindungselementes 10 sichtbar.
   c. Seitenansicht der Abwicklung der Schürze der oberen Elektrode. In dieser Ansicht ist der Querschnitt der Elektrode 4 sichtbar.
Figur 2:
   Figur 2 zeigt die Skizze eines erfindungsgemäßen Wanderbettreaktors mit direkter elektrischer Beheizung.
Figur 3:
   Figur 3 zeigt eine Detailzeichnung des mittleren Abschnittes des Reaktorgehäuses.
Figur 4:
   Figur 4 zeigt eine Detailzeichnung der oberen Reaktorhaube in der Seitenansicht (oben) und in der Draufsicht (unten).
Figur 5:
   Figur 5 zeigt eine Detailzeichnung der unteren Reaktorhaube in der Seitenansicht (unten) und in der Ansicht von unten (oben).
Figur 6:
   Figur 6 zeigt eine Variante des erfindungsgemäßen Reaktors mit einer zweischaligen oberen Reaktorhaube.
Figur 7:
   Figur 7 zeigt eine Detaildarstellung der oberen Reaktorhaube in der Seitenansicht (oben) und in der Draufsicht (unten).
Figur 8:

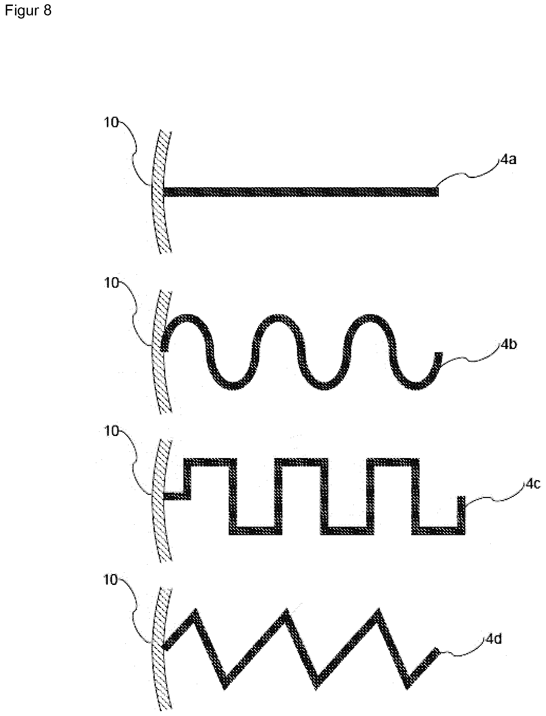

   Figur 8 zeigt vorteilhafte Längsprofile der Elektrodenstege in der erfindungsgemäßen oberen Elektrode. Jeweils identische Profile werden in der unteren Elektrode verwendet.
Figur 9:
   Figur 9 zeigt vorteilhafte Seitenprofile der Elektrodenstege in der erfindungsgemäßen oberen Elektrode. Die Unterseite der Stege ist horizontal.
Figur 10:
   Figur 10 zeigt vorteilhafte Seitenprofile der Stege in der erfindungsgemäßen unteren Elektrode. Die Oberseite der Stege ist horizontal.
Figur 11:
   Figur 11 zeigt vorteilhafte Querschnittsprofile der Elektrodenstege und Platten einer erfindungsgemäßen gitterförmigen Elektrode.
Figur 12:
   Figur 12 zeigt vorteilhafte Draufsicht gitterförmiger Elektroden.
   a. Wabenförmiges Gitter. Die Waben können regelmäßige oder unregelmäßige Vielecke sein. Seitenzahl 3 bis 20.
   b. Rechteckgitter
Figur 13:
   Figur 13 zeigt bevorzugte Draufsicht gitterförmiger Elektroden.
   a. Speichenförmiges geteiltes Gitter
   b. Speichenförmiges geteiltes Gitter mit Seitenstegen
Figur 14:
   Figur 14 zeigt besonders bevorzugte Draufsicht gitterförmiger Elektroden. Die gestrichelten Linien zeigen die Grenzen der Segmente.
   a. Ringförmiges "fraktal skaliertes" Gitter, geteilt in vier Segmente
   b. Ringförmiges "fraktal skaliertes" Gitter, geteilt in sechs Segmente
Figur 15:
   Figur 15 zeigt ein Segment einer erfindungsgemäßen geteilten gitterförmigen Elektrode bestehend aus einem Elektrodensteg, die an der Schürze der Reaktorhaube befestigt ist und orthogonal dazu angeordneten Platten.
   a) Der Elektrodensteg steht auf der Unterseite und die Platten stehen auf der Oberseite über.
   b) Der Elektrodensteg steht nach oben und nach unten über.
Figur 16:

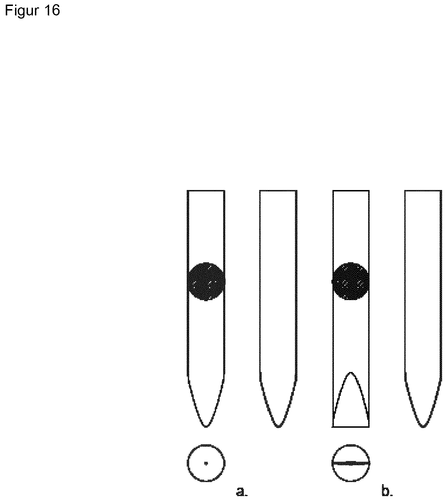

   Figur 16 zeigt erfindungsgemäße Stabelektroden.
   a) Stabelektrode mit konischem Ende: Vorderansicht (links), Seitenansicht (rechts), Draufsicht (unten).
   b) Stabelektrode mit keilförmigem Ende: Vorderansicht (links), Seitenansicht (rechts), Draufsicht (unten).
Figur 17:

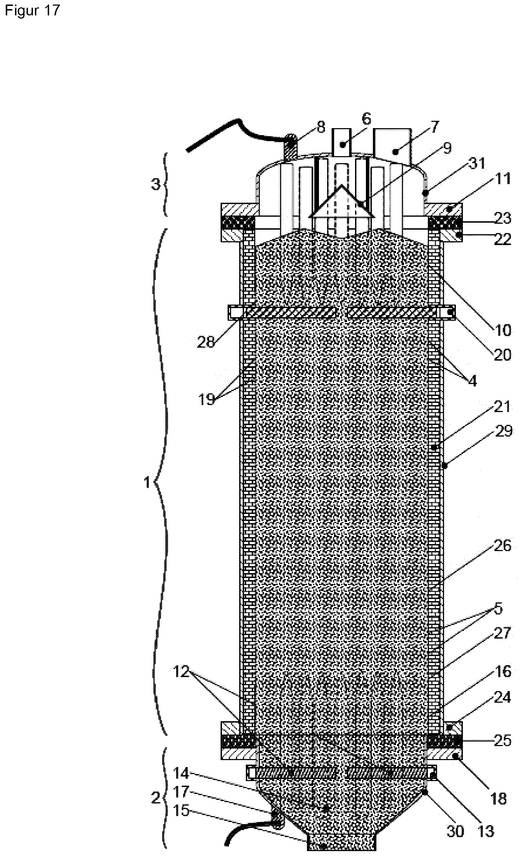

   Figur 17 zeigt die Skizze eines erfindungsgemäßen Wanderbettreaktors mit direkter elektrischer Beheizung mit Stabelektroden.
Figur 18:

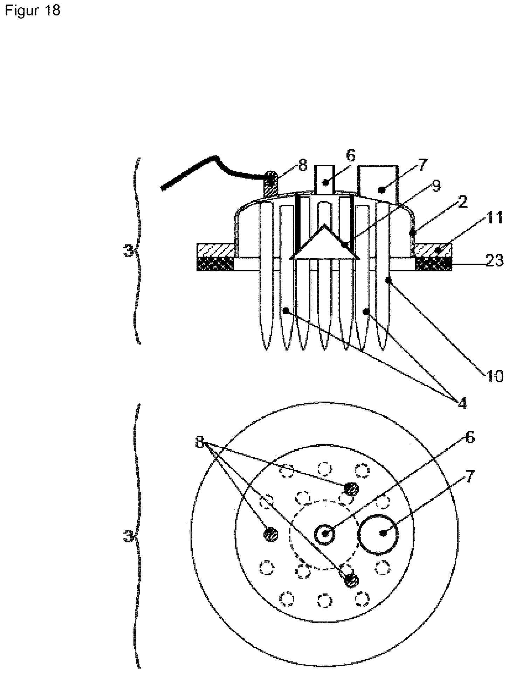

   Figur 18 zeigt eine Detaildarstellung der oberen Reaktorhaube mit Stabelektroden in der Seitenansicht (oben) und in der Draufsicht (unten).
Figur 19:
   Figur 19 zeigt eine Skizze der erfindungsgemäßen Durchführung durch die äußere Schale der oberen Haube für den Eintritt des festen Partikelstroms.
Figur 20:
   Figur 20 zeigt eine Skizze der erfindungsgemäßen Durchführung durch die äußere Schale der oberen Haube für die Anschlussschiene des elektrischen Stroms.
Figur 21:
   Figur 21 zeigt die Skizze eines erfindungsgemäßen Festbettreaktors mit direkter elektrischer Beheizung.
Figur 22:
   Figur 22 zeigt eine Hand-Skizze eines erfindungsgemäßen oberen oder unteren Vorrichtungsabschnitts zur Verdeutlichung der Berechnung des Verhältnisses der Querschnittsflächen der oberen oder unteren Elektrode (A_{EI}) zur Querschnittsfläche des jeweiligen stromleitenden Verbindungselements (A_{VE}).
Figur 23:
   Figur 23 zeigt eine Hand-Skizze eines Prototyps des Elektrodenanschlusses analog der Zeichnungen von US 5,903,591 zur Verdeutlichung der Berechnung des Verhältnisses der Querschnittsflächen der Elektrode (A_{EI}) zur Querschnittsfläche des jeweiligen stromleitenden Verbindungselements (A_{VE}).

### Legende:

1. Mittlerer Abschnitt des Reaktors
2. Unterer stirnseitiger Abschnitt des Reaktors / untere Reaktorhaube / untere Vorrichtungsabschnitt
3. Oberer stirnseitiger Abschnitt des Reaktors /obere Reaktorhaube / obere Vorrichtungsabschnitt
4. Elektrodenstege einer geteilten oberen Elektrode
5. Elektrodenstege einer geteilten unteren Elektrode
6. Eintritt des festen Partikelstroms
7. Austritt des gasförmigen Produktstroms
8. Anschlussschiene für den elektrischen Strom in der oberen Reaktorhaube
9. Kegelverteiler
10. Verbindungselement / Schürze in der oberen Reaktorhaube zur Kontaktierung der Elektroden
11. Flansch an der oberen Reaktorhaube
12. Plattenverteiler für den gasförmigen Eduktstrom
13. Ringverteiler für den gasförmigen Eduktstrom
14. Konisch geformte untere Reaktorhaube
15. Austritt des festen Produktstroms
16. Verbindungselement / Schürze in der unteren Reaktorhaube zur Kontaktierung der Elektroden
17. Anschlussschiene für den elektrischen Strom in der unteren Reaktorhaube
18. Flansch an der unteren Reaktorhaube
19. Kanäle für den Seitenabzug eines gasförmigen Teilstroms aus der Reaktionsstrecke
20. Ringsammler für den Seitenabzug
21. Auskleidung des Reaktormantels mit einer feuerfesten, elektrisch und thermisch isolierenden Ausmauerung
22. Flansch am oberen Ende des Reaktormantels
23. Elektrisch isolierender Zwischenring zwischen den Flanschen der oberen Haube und des Reaktormantels
24. Flansch am unteren Ende des Reaktormantels
25. Elektrisch isolierender Zwischenring zwischen den Flanschen der oberen Haube und des Reaktormantels
26. Beheizte Strecke in der Partikelschüttung / im Wanderbett
27. Untere Wärmeübertragungszone in der Partikelschüttung / im Wanderbett
28. Obere Wärmeübertragungszone in der Partikelschüttung / im Wanderbett
29. Gehäusewand des mittleren Reaktorabschnitts
30. Gehäusewand der unteren Reaktorhaube
31. Gehäusewand der oberen Reaktorhaube
41. Äußere Schale der oberen Reaktorhaube / oberen Vorrichtungsabschnitts
42. Flansch an der oberen Reaktorhaube / unteren Vorrichtungsabschnitts
43. Elektrisch isolierende, gasdichte Durchführungen in der äußeren Schale der oberen Reaktorhaube
44. Eintritt Spülstrom für den Spalt zwischen der inneren und der äußeren Schale der oberen Haube
45. Austritt Spülstrom aus dem Spalt zwischen der inneren und der äußeren Schale der oberen Haube
46. Durchgängig starr in der Schürze der Reaktorhaube eingespannte Stege eines gitterförmigen Elektrodengitters
47. Einseitig an den Elektrodenstegen einer geteilten Elektrode befestigte Platten oder Seitenstege
51. Stutzen an der äußeren Schale mit Anschweißflansch
52. Anschlussleitung mit Anschweißflansch
53. Zwischenring
54. Stutzen an der inneren Schale mit Kompensator und angeschweißter Gewindeplatte
55. Dichtungen zur Verbindung der Flansche (51) und (52) mit dem Zwischenring (53)
56. Dichtungen zur Verbindung zwischen der Gewindeplatte (54) und dem Zwischenring (53)
57. Hülsen aus elektrisch isolierendem Material
58. Einleitrohr für den festen Partikelstrom
61. Stutzen an der äußeren Schale mit Kompensator und Anschweißflansch
62. Losflansch
63. Anschlussstift für den elektrischen Strom an der inneren Schale der Haube
64. Anschlussbuchse für den elektrischen Strom als Gegenstück zu (63)
65. Hülsen aus elektrisch isolierendem Material
66. Dichtungen zur Verbindung der Flansche (61) und (62) mit der Hülse (65) 67: Hülse aus elektrisch isolierendem Material
71. Oberer stirnseitiger Abschnitt des Reaktorgehäuses / obere Reaktorhaube / oberer Vorrichtungsabschnitt geformt als Klöpperboden
72. Katalysatorstuhl zur Abstützung des katalytischen Festbettes
73. Eintritt des gasförmigen Eduktstroms
74. Austritt des gasförmigen Produktstroms
A_{EI}: Querschnittsfläche der Elektrode
A_{VE}: Querschnittsfläche des Verbindungselements
VE: Verbindungselement
H: Haube
D: Dichtungs- und Isolationsring
SW: Seitenwand
WD: Wärmedämmung / Ausmauerung
F1: Flansch an der Haube
F2: Flansch an der Seitenwand
EI: Elektrode
T: Trichter
ZS: Zylindrischer Schacht

### Beispiele:

### Vergleichsbeispiel (in Analogie zur US 5,946,342):

In einem Wanderbettreaktor mit direkter elektrischer Beheizung soll die Methanpyrolyse durchgeführt werden. Der Volumenstrom des gasförmigen Eduktes beträgt 11000 Nm3/h. Der Strom enthält 65 vol% Methan, 15 vol% Wasserstoff und Stickstoff mit ca. 20 vol%. Der feste Eduktstrom, der von oben in den Reaktor eingeleitet wird, beträgt 11,45 t/h. Der Partikelstrom besteht aus Koks mit einem Kohlenstoffgehalt > 99,5%. Der Durchmesser der Reaktionsstrecke beträgt 3400 mm, die Höhe der elektrisch beheizten Zone beträgt 2000 mm. Am oberen und am unteren Ende der beheizten Zone sind gitterförmige Elektroden aus Graphit angeordnet, über welche der elektrische Strom in die Feststoffpackung des Wanderbettes eingeleitet wird. Oberhalb der oberen Elektrode befindet sich eine 1000 mm lange Wärmeübertragungszone. Analog befindet sich unterhalb der unteren Elektrode eine 1000 mm lange Wärmeübertragungszone. Ein elektrischer Strom von 70000 A soll in den Reaktor eingeleitet werden. Die Einleitung des elektrischen Stroms geschieht über zwölf zylindrische Elektrodenzuleitungen aus Graphit, die auf der Höhe der jeweiligen Elektrode sternförmig und gleichmäßig über den Umfang des Reaktormantels angeordnet sind. Die Elektrodenzuleitungen haben einen Durchmesser von 100mm und einer Länge von 1000mm. In den Elektrodenzuführungen werden 1000kW in Wärme umgewandelt. Diese Leistung entspricht 12,5% der erforderlichen Prozessleistung. Sie belastet als Verlustleistung die Energiebilanz des Prozesses. Zusätzlich muss die in Wärme dissipierte elektrische Energie abgeführt werden. Dabei ist die Tatsache problematisch, dass die volumenspezifische Entwicklung in den Elektrodenzuleitungen 6,2MW/m3 beträgt. Entsprechend beträgt die Wärmestromdichte an der Oberfläche der Elektrodenzuleitung 154 kW/m2. Diese Wärmestromdichte kann, ohne eine gezielte Intensivkühlung an der Oberfläche der Elektrodenzuleitung, Übertemperaturen größer als 1000K hervorrufen. Mit diesen Einstellungen wird ein Methanumsatz von 94,2% erreicht. Die Maximaltemperatur im Reaktor beträgt 1230°C. Die Temperaturdifferenz zwischen dem festen Produktstrom und dem gasförmigen Eduktstrom am unteren Ende des Reaktors ist praktisch Null und die Temperaturdifferenz zwischen dem gasförmigen Produktstrom und dem festen Eduktstrom am oberen Ende des Reaktors 315K. Da die Überschusswärme auf einem mäßigen Temperaturniveau anfällt, kann sie nur mit einem niedrigen Wirkungsgrad in mechanische Energie umgewandelt werden.

### Erfindungsgemäßes Beispiel:

In einem Wanderbettreaktor mit direkter elektrischer Beheizung soll die Methanpyrolyse durchgeführt werden. Der Volumenstrom des gasförmigen Eduktes beträgt 11000 Nm3/h. Der Strom enthält 65 vol% Methan, 15 vol% Wasserstoff und Stickstoff mit ca. 20 vol%. Der feste Eduktstrom, der von oben in den Reaktor eingeleitet wird, beträgt 13,5 t/h. Der Partikelstrom besteht aus Koks mit einem Kohlenstoffgehalt > 99,5%. Der Durchmesser der Reaktionsstrecke beträgt 3400 mm, die Höhe der elektrisch beheizten Zone beträgt 2000 mm. Am oberen und am unteren Ende der beheizten Zone sind gitterförmige Elektroden aus Molybdän angeordnet, über welche der elektrische Strom in die Feststoffpackung des Wanderbettes eingeleitet wird. Die Elektrode ist als speichenförmiges, geteiltes Gitter mit Seitenstegen ausgeführt. Es enthält 12 Elektrodenstege (Speichen) und acht Elektrodenplatten (Seitenstege) pro Elektrodensteg.

Das Seitenprofil der Elektrodenstege ist rechteckig 1600 mm in der Länge und 300 mm in der Höhe. Der Querschnitt der Elektrodenstege ist sechseckig, wie in Figur 11 dargestellt. Die Elektrodenstege sind als Hohlprofile ausgeführt. Die Hülle der Elektrodenstege bestehen aus einem mehrlagigen Gittergewebe (HAVER & BOECKER POROSTAR STANDARD 6-lagig). Entlang der Elektrodenstege sind in gleichmäßigen Abständen von 200 mm die Elektrodenplatten angebracht. Die Elektrodenplatten bestehen aus Molybdän. Die Elektrodenplatten sind gerade und mittig an den Elektrodenstegen befestigt gemäß Figur 13b. Die Länge der Elektrodenplatten nimmt von innen nach außen zu. Im Einzelnen beträgt die Länge der Elektrodenplatten (175 mm, 260 mm, 350 mm, 440 mm, 525 mm, 610 mm, 700 mm, 790 mm). Das Seitenprofil der Elektrodenplatten ist rechteckig. Die Höhe der Elektrodenplatten ist einheitlich 200 mm. Die Elektroden sind als Vollprofile ausgeführt. Der Querschnitt der Elektrodenplatten ist sechseckig wie in Figur 11 dargestellt, die Dicke der Elektrodenplatten beträgt einheitlich 20 mm.

Der elektrische Strom wird über die Reaktorhauben eingeleitet. Die obere Haube hat die Form eines Klöpperbodens und besteht aus Stahl 1.4541 mit einer Wandstärke von 20 mm. An der Haube ist eine zylindrische Schürze aus Molybdän mit einer Länge von 1000 mm angeschraubt. Die untere Haube hat eine konische Form und besteht aus Stahl 1.4541 mit einer Wandstärke von 20 mm. An der Haube ist eine zylindrische Schürze aus Molybdän mit einer Länge von 1000 mm angeschraubt. Ein elektrischer Strom von 67500 A soll in den Reaktor eingeleitet werden. Kontaktierung über die Haube und zwölf Elektrodenstegen: Die Verlustwärme beträgt 19,5 kW, entsprechend 0,2 % der übertragenen Leistung. Diese Leistung bewirkt eine Erhitzung der Hauben um ca. 100K oberhalb der Umgebungstemperatur und kann ohne besondere Maßnahmen an die Umgebung abgeführt werden.

Die Elektrodenstege funktionieren gleichzeitig als Kanäle für den Seitenabzug eines Teilstroms aus der Reaktionszone. Dafür sind die Elektrodenstege durch die Schürze durchgesteckt und am äußeren Ende offen. Alle Elektrodenstege enden in einen Ringkanal, der als Sammelkanal für den Seitenabzug funktioniert. Dadurch werden 15% des Gasstroms am oberen Ende der beheizten Zone der Reaktionszone abgezogen. Mit diesen Einstellungen wird ein Methanumsatz von 96,5% erreicht. Die Maximaltemperatur im Reaktor beträgt 1320°C. Die Temperaturdifferenz zwischen dem festen Produktstrom und dem gasförmigen Eduktstrom am unteren Ende des Reaktors beträgt 26 K und die Temperaturdifferenz zwischen dem gasförmigen Produktstrom und dem festen Eduktstrom am oberen Ende des Reaktors 75 K. Dadurch wird eine exzellente Wärmeintegration im Reaktor erreicht. Die Überschusswärme wird hauptsächlich mit dem Seitenstrom auf einem Temperaturniveau von 1270 °C ausgekoppelt.

### Zusammenfassung:

| | Vergleichsbeispiel | Erfindungsgemäßes Beispiel |
|---|---|---|
| Leistungsverlust in den Elektroden | 1MW | 0,02MW |
| Anteil der in den Elektroden dissipierten Leistung bezogen auf die effektive Prozessleistung | 12,5% | 0,2% |
| Methanumsatz | 94,2% | 96,5% |
| Max. Temperatur im Reaktor | 1230°C | 1320°C |
| Wirkungsgrad der Wärmeintegration im Hauptstrom | 60% | 72% |
| Wirkungsgrad der Wärmeintegration im Hauptstrom und im Seitenstrom | 60% | 83% |

## Patentansprüche

1. Elektrisch beheizbare gepackte drucktragende Vorrichtung zur Durchführung von endothermen Reaktionen mit einem oberen (3), mittleren (1) und unteren (2) Vorrichtungsabschnitt, wobei im mittleren Abschnitt mindestens ein vertikal angeordnetes Elektrodenpaar (4,5) eingebaut ist und alle Elektroden in einer elektrisch-leitenden Feststoff-Packung (26) angeordnet sind, der obere und untere Vorrichtungsabschnitt eine spezifische Leitfähigkeit von 10⁵ S/m bis 10⁸ S/m aufweist, und der mittlere Vorrichtungsabschnitt gegen die Feststoff-Packung elektrisch isoliert ist, **dadurch gekennzeichnet, dass** der obere und untere Vorrichtungsabschnitt gegen den mittleren Vorrichtungsabschnitt elektrisch isoliert ist, die obere Elektrode über den oberen Vorrichtungsabschnitt und die untere Elektrode über den unteren Vorrichtungsabschnitt angeschlossen sind oder die Elektroden jeweils über ein oder mehrere an diesen Abschnitten elektrisch kontaktierte Verbindungselemente (10,16) angeschlossen sind und das Verhältnis der Querschnittsfläche der oberen und unteren Elektrode zur Querschnittsfläche des jeweiligen stromleitenden Verbindungselements oder, ohne Verwendung eines Verbindungselements, das Verhältnis der Querschnittsfläche der oberen und unteren Elektrode zur Querschnittsfläche des jeweiligen stromleitenden Vorrichtungsabschnitts 0,1 bis 10 beträgt.

2. Vorrichtung nach Anspruch 1, **dadurch gekennzeichnet, dass** das Verhältnis der Querschnittsfläche der oberen und unteren Elektrode zur Querschnittsfläche des jeweiligen stromleitenden Verbindungselements oder, ohne Verwendung eines Verbindungselements, das Verhältnis der Querschnittsfläche der oberen und unteren Elektrode zur Querschnittsfläche des jeweiligen stromleitenden Vorrichtungsabschnitts 0,3 bis 3 beträgt.

3. Vorrichtung nach Anspruch 1 oder 2, **dadurch gekennzeichnet, dass** das Verhältnis der Querschnittsfläche des Verbindungselements zur Querschnittsfläche der Feststoff-Packung 0,001 bis 0,2 und/oder das Verhältnis der Querschnittsfläche des stromführenden oberen oder unteren Vorrichtungsabschnitts zur Querschnittsfläche der Feststoff-Packung 0,001 bis 0,2 beträgt.

4. Vorrichtung nach mindestens einem der Ansprüche 1 bis 3, **dadurch gekennzeichnet, dass** die Elektroden als speichenförmiges Elektrodengitter mit 2 bis 30 sternförmig angeordneten Stegen ausgestaltet sind.

5. Vorrichtung nach mindestens einem der Ansprüche 1 bis 4, **dadurch gekennzeichnet, dass** die Elektrodenstege an ihrem äußeren Ende mit mindestens einem Verbindungselement oder über den oberen beziehungsweise unteren Vorrichtungsabschnitt verbunden sind und diese Verbindung das einzige Festlager für die Positionierung der einzelnen Elektrodenstege ist.

6. Vorrichtung nach mindestens einem der Ansprüche 1 bis 5, **dadurch gekennzeichnet, dass** die Temperatur der oberen Elektrode mindestens 350°C beträgt.

7. Vorrichtung nach mindestens einem der Ansprüche 1 bis 6, **dadurch gekennzeichnet, dass** der obere und der untere Vorrichtungsabschnitt als Haube ausgestaltet und vom mittleren Vorrichtungsabschnitt abnehmbar ist.

8. Vorrichtung nach mindestens einem der Ansprüche 1 bis 7, **dadurch gekennzeichnet, dass** die stromführenden Kontaktflächen zwischen der Elektrode und dem Verbindungselement zwischen 0,1 cm² und 10000 cm² betragen.

9. Vorrichtung nach mindestens einem der Ansprüche 1 bis 8, **dadurch gekennzeichnet, dass** der vertikale Abstand zwischen dem oberen Rand der Feststoff-Packung und dem unteren Rand der Elektroden an der oberen Elektrode von 10 mm bis 5000 mm beträgt und der vertikale Abstand zwischen dem oberen Rand der Elektroden an der unteren Elektrode und dem Zulauf der gasförmigen Edukte von 10 mm bis 5000 mm beträgt.

10. Vorrichtung nach mindestens einem der Ansprüche 1 bis 9, **dadurch gekennzeichnet, dass** die Querschnittsversperrung der Elektroden zwischen 1 % und 20 % beträgt.

11. Vorrichtung nach mindestens einem der Ansprüche 1 bis 10, **dadurch gekennzeichnet, dass** die Elektrodenstege jeweils daran befestigte 1 bis 100 Elektrodenplatten aufweisen und den Querschnitt der Vorrichtung in Gitterzellen aufteilen, wobei der äquivalente Durchmesser der Gitterzellen zwischen 10 mm und 2000 mm beträgt.

12. Vorrichtung nach mindestens einem der Ansprüche 1 bis 11, **dadurch gekennzeichnet, dass** der obere und/oder untere Vorrichtungsabschnitt zweischalig ausgeführt ist und die innere Schale das stromleitende Verbindungselement ist und die äußere Schale gegenüber der inneren Schale elektrisch isoliert ist.

13. Verfahren zur Durchführung endothermer Gasphasen- oder Gas-Feststoff-Prozesse in einer Vorrichtung nach mindestens einem der Ansprüche 1 bis 12.

14. Verfahren nach Anspruch 13, **dadurch gekennzeichnet, dass** die elektrisch leitfähige Feststoff-Packung als Gegenstrom-Wanderbett ausgeführt ist.

15. Verfahren nach Anspruch 13 oder 14, **dadurch gekennzeichnet, dass** am oberen Rand der Feststoff-Packung die Differenz zwischen der Austrittstemperatur des gasförmigen Produktstroms und des Zulaufstroms aus Feststoffpartikeln von 0 K bis 500 K beträgt und am unteren Rand der Feststoff-Packung die Differenz zwischen der Austrittstemperatur des festen Produktstroms und des gasförmigen Zulaufstroms von 0 K bis 500 K beträgt.

## Claims

1. An electrically heatable packed pressure-bearing apparatus for conducting endothermic reactions having an upper (3), middle (1) and lower (2) apparatus section, where at least one pair of electrodes (4,5) in a vertical arrangement is installed in the middle section and all electrodes are disposed in an electrically conductive solid-state packing (26), the upper and lower apparatus section has a specific conductivity of 10⁵ S/m to 10⁸ S/m, and the middle apparatus section is electrically insulated against the solid-state packing, wherein the upper and lower apparatus sections are electrically insulated from the middle apparatus section, the upper electrode is connected via the upper apparatus section and the lower electrode via the lower apparatus section or the electrodes are each connected via one or more connecting elements (10, 16) that are in electrical contact with these sections and the ratio of the cross-sectional area of the upper and lower electrode to the cross-sectional area of the respective current-conducting connecting element or, without use of a connecting element, the ratio of the cross-sectional area of the upper and lower electrode to the cross-sectional area of the respective current-conducting apparatus section is 0.1 to 10.

2. The apparatus according to claim 1, wherein the ratio of the cross-sectional area of the upper and lower electrode to the cross-sectional area of the respective current-conducting connecting element or, without use of a connecting element, the ratio of the cross-sectional area of the upper and lower electrode to the cross-sectional area of the respective current-conducting apparatus section is 0.3 to 3.

3. The apparatus according to claim 1 or 2, wherein the ratio of the cross-sectional area of the connecting element to the cross-sectional area of the solid-state packing is 0.001 to 0.2 and/or the ratio of the cross-sectional area of the current-conducting upper or lower apparatus section to the cross-sectional area of the solid-state packing is 0.001 to 0.2.

4. The apparatus according to at least one of claims 1 to 3, wherein the electrodes are configured as an electrode grid in the form of spokes with 2 to 30 bars arranged in a star shape.

5. The apparatus according to at least one of claims 1 to 4, wherein the electrode bars are connected at their outer end to at least one connecting element or via the upper or lower apparatus section and this connection is the sole fixed support for the positioning of the individual electrode bars.

6. The apparatus according to at least one of claims 1 to 5, wherein the temperature of the upper electrode is at least 350°C.

7. The apparatus according to at least one of claims 1 to 6, wherein the upper and lower apparatus section is configured as a hood and is removable from the middle apparatus section.

8. The apparatus according to at least one of claims 1 to 7, wherein the current-conducting contact surfaces between the electrode and the connecting element are between 0.1 cm² and 10 000 cm².

9. The apparatus according to at least one of claims 1 to 8, wherein the vertical distance between the upper edge of the solid-state packing and the lower edge of the electrodes at the upper electrode is from 10 mm to 5000 mm and the vertical distance between the upper edge of the electrodes at the lower electrode and the feed of the gaseous reactants is from 10 mm to 5000 mm.

10. The apparatus according to at least one of claims 1 to 9, wherein the cross-sectional blocking of the electrodes is between 1% and 20%.

11. The apparatus according to at least one of claims 1 to 10, wherein the electrode bars each have 1 to 100 electrode plates secured thereto and divide the cross section of the apparatus into grid cells, where the equivalent diameter of the grid cells is between 10 mm and 2000 mm.

12. The apparatus according to at least one of claims 1 to 11, wherein the upper and/or lower apparatus section is in a twin-shell design and the inner shell is the current-conducting connecting element and the outer shell is electrically insulated from the inner shell.

13. A process for conducting endothermic gas phase or gas-solid processes in an apparatus according to at least one of claims 1 to 12.

14. The process according to claim 13, wherein the electrically conductive solid-state packing is executed as a countercurrent moving bed.

15. The process according to claim 13 or 14, wherein, at the upper edge of the solid-state packing, the difference between the exit temperature of the gaseous product stream and the feed stream of solid particles is from 0 K to 500 K and, at the lower edge of the solid-state packing, the difference between the exit temperature of the solid product stream and the gaseous feed stream is from 0 K to 500 K.

## Revendications

1. Dispositif à chauffage électrique, garni, résistant à la pression, destiné à conduire des réactions endothermiques, comprenant des parties de dispositif supérieure (3), centrale (1) et inférieure (2),
dans lequel, dans la partie centrale, au moins une paire d'électrodes (4, 5) disposée verticalement est incorporée, et toutes les électrodes sont disposées dans une garniture solide électroconductrice (26), les parties de dispositif supérieure et inférieure présentent une conductivité spécifique de 10⁵ S/m à 10⁸ S/m, et la partie de dispositif centrale est isolée électriquement par rapport à la garniture solide,
**caractérisé en ce que** les parties de dispositif supérieure et inférieure sont isolées électriquement par rapport à la partie de dispositif centrale, l'électrode supérieure est connectée par l'intermédiaire de la partie de dispositif supérieure et l'électrode inférieure est connectée par l'intermédiaire de la partie de dispositif inférieure, ou les électrodes sont connectées respectivement par l'intermédiaire d'un ou de plusieurs éléments de liaison (10, 16) en contact électrique avec ces parties, et le rapport entre la superficie de la section des électrodes supérieure et inférieure et la superficie de la section de l'élément de liaison conducteur respectif ou, sans utilisation d'un élément de liaison, le rapport entre la superficie de la section des électrodes supérieure et inférieure et la superficie de la section de la partie de dispositif conductrice respective est de 0,1 à 10.

2. Dispositif selon la revendication 1, **caractérisé en ce que** le rapport entre la superficie de la section des électrodes supérieure et inférieure et la superficie de la section de l'élément de liaison conducteur respectif ou, sans utilisation d'un élément de liaison, le rapport entre la superficie de la section des électrodes supérieure et inférieure et la superficie de la section de la partie de dispositif conductrice respective est de 0,3 à 3.

3. Dispositif selon la revendication 1 ou 2, **caractérisé en ce que** le rapport entre la superficie de la section de l'élément de liaison et la superficie de la section de la garniture solide est de 0,001 à 0,2, et/ou le rapport entre la superficie de la section des parties de dispositif conductrices supérieure et inférieure et la superficie de la section de la garniture solide est de 0,001 à 0,2.

4. Dispositif selon au moins l'une des revendications 1 à 3, **caractérisé en ce que** les électrodes sont configurées sous la forme d'une grille d'électrodes en forme de rayons, dotée de 2 à 30 barrettes disposées en étoile.

5. Dispositif selon au moins l'une des revendications 1 à 4, **caractérisé en ce que** les barrettes d'électrode sont reliées à leur extrémité extérieure à au moins un élément de liaison ou par l'intermédiaire de la partie de dispositif supérieure ou inférieure respectivement, et cette liaison est le seul support fixe pour le positionnement des barrettes d'électrode individuelles.

6. Dispositif selon au moins l'une des revendications 1 à 5, **caractérisé en ce que** la température de l'électrode supérieure s'élève au moins à 350 °C.

7. Dispositif selon au moins l'une des revendications 1 à 6, **caractérisé en ce que** les parties de dispositif supérieure et inférieure sont configurées sous forme de capot et peuvent être retirées de la partie de dispositif centrale.

8. Dispositif selon au moins l'une des revendications 1 à 7, **caractérisé en ce que** les surfaces de contact conductrices entre l'électrode et l'élément de liaison mesurent entre 0,1 cm² et 10 000 cm².

9. Dispositif selon au moins l'une des revendications 1 à 8, **caractérisé en ce que** la distance verticale entre le bord supérieur de la garniture solide et le bord inférieur des électrodes au niveau de l'électrode supérieure mesure de 10 mm à 5000 mm, et la distance verticale entre le bord supérieur des électrodes au niveau de l'électrode inférieure et l'arrivée des éduits gazeux mesure de 10 mm à 5000 mm.

10. Dispositif selon au moins l'une des revendications 1 à 9, **caractérisé en ce que** l'obstruction de section transversale des électrodes est comprise entre 1 % et 20 %.

11. Dispositif selon au moins l'une des revendications 1 à 10, **caractérisé en ce que** les barrettes d'électrode présentent respectivement de 1 à 100 plaquettes d'électrodes fixées à celles-ci et divisent la section transversale du dispositif en cellules de grille, le diamètre équivalent des cellules de grille mesurant entre 10 mm et 2000 mm.

12. Dispositif selon au moins l'une des revendications 1 à 11, **caractérisé en ce que** les parties de dispositif supérieure et/ou inférieure sont réalisées en deux coques, et la coque intérieure est l'élément de liaison conducteur et la coque extérieure est isolée électriquement par rapport à la coque intérieure.

13. Procédé destiné à conduire des processus endothermiques en phase gazeuse ou gaz/solide dans un dispositif selon au moins l'une des revendications 1 à 12.

14. Procédé selon la revendication 13, **caractérisé en ce que** la garniture solide électroconductrice est réalisée sous forme de lit mobile à contre-courant.

15. Procédé selon la revendication 13 ou 14, **caractérisé en ce qu'**au niveau du bord supérieur de la garniture solide, la différence entre la température de sortie du flux de produit gazeux et du flux d'arrivée de particules solides est de 0 K à 500 K, et **en ce qu'**au niveau inférieur de la garniture solide, la différence entre la température de sortie du flux de produit solide et du flux d'arrivée gazeux est de 0 K à 500 K.
